(19) Europäisches Patentamt
European Patent Office
Office européen des brevets

(11) EP 3 118 665 B1

(12) EUROPEAN PATENT SPECIFICATION

(45) Date of publication and mention
of the grant of the patent:
**29.11.2017 Bulletin 2017/48**

(51) Int Cl.:
*G02B 21/02* (2006.01)      *G02B 21/24* (2006.01)
*G01N 21/41* (2006.01)      *G02B 21/36* (2006.01)
*G06T 11/20* (2006.01)      *G06T 11/60* (2006.01)

(21) Application number: **16178657.9**

(22) Date of filing: **08.07.2016**

(54) **MICROSCOPY SYSTEM, REFRACTIVE-INDEX CALCULATING METHOD, AND PROGRAM**

MIKROSKOPSYSTEM, BRECHUNGSINDEXBERECHNUNGSVERFAHREN UND PROGRAMM

SYSTÈME DE MICROSCOPIE, PROCÉDÉ DE CALCUL D'INDICE DE RÉFRACTION ET
PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2015 JP 2015141964**

(43) Date of publication of application:
**18.01.2017 Bulletin 2017/03**

(73) Proprietor: **Olympus Corporation
Tokyo 192-8507 (JP)**

(72) Inventors:
• **UE, Yoshihiro**
**Tokyo, 192-8507 (JP)**
• **NISHIWAKI, Daisuke**
**Tokyo, 192-8507 (JP)**
• **OKAZAKI, Kenya**
**Tokyo, 192-8507 (JP)**
• **ONO, Osamu**
**Tokyo, 192-8507 (JP)**
• **SUZUKI, Shingo**
**Tokyo, 192-8507 (JP)**

(74) Representative: **Gunzelmann, Rainer
Wuesthoff & Wuesthoff
Patentanwälte PartG mbB
Schweigerstraße 2
81541 München (DE)**

(56) References cited:
**EP-A2- 3 035 104          US-A1- 2006 098 213
US-A1- 2014 233 094      US-A1- 2015 015 871**

Remarks:
The file contains technical information submitted after
the application was filed and not included in this
specification

**Description**

**Background of the Invention**

**Field of the Invention**

The present invention relates to a microscopy system for calculating a refractive index, a refractive-index calculating method, and a program.

**Description of the Related Art**

In recent biological studies, in order to better understand a biological function, there has been an increasing need to observe a biological sample up to its deep portion in a state closer to that of the actual activity of a living organism (in vivo). Further, a study that obtains various pieces of information on a biological sample and analyzes them so as to better understand a biological function has also been conducted. In particular, a refractive index of a biological sample has attracted attention as useful information to better understand a biological function.

Japanese Laid-open Patent Publication No. 2013-088138 discloses a technology that calculates an amount of change in a refractive index of a sample so as to obtain, from the calculated information, concentration information such as a blood sugar level.

However, it is difficult to measure a refractive index of an arbitrary portion in a sample, such as a deep portion of a biological sample, by the refractive-index measuring method disclosed in Japanese Laid-open Patent Publication No. 2013-088138.

In light of the problem described above, an object of the present invention is to provide a technology that calculates a refractive index of an arbitrary portion in a sample. US2015/0015871 discloses a microscope system that permits to calculate an average refractive index of a sample. An object of the invention is to provide a microscopy system that calculates a refractive index of a sample in an alternative way.

**Summary of the Invention**

An aspect of the present invention provides a microscopy system according to claim 1.

Another aspect of the present invention provides a refractive-index calculating method according to claim 7.

Yet another aspect of the present invention provides a program according to claim 13.

The present invention permits a calculation of a refractive index of an arbitrary portion in a sample.

**Brief Description of the Drawings**

The present invention will be more apparent from the following detailed description when the accompanying drawings are referenced.

FIG. 1 illustrates an example of a configuration of a microscopy system according to a first embodiment;
FIG. 2 illustrates an example of a configuration of an arithmetic device of FIG. 1;
FIG. 3 illustrates an example of a configuration of a microscope of FIG. 1;
FIG. 4 is a flowchart of refractive-index displaying processing;
FIG. 5 illustrates an example of a structure of a sample S;
FIG. 6 illustrates an example of a graph displayed on a display device of FIG. 1;
FIG. 7 is a flowchart of refractive-index calculating processing;
FIG. 8 illustrates a relationship between a change rate and a refractive index;
FIG. 9A illustrates a graph on which refractive index information at a target position is displayed;
FIG. 9B illustrates a graph on which refractive index information at a different target position than that of FIG. 9A is displayed;
FIG. 10 illustrates a graph on which refractive index information that indicates a refractive index distribution of the sample is displayed;
FIG. 11 is a diagram for explaining a method for calculating a refractive index;
FIG. 12 is a flowchart of another refractive-index displaying processing;
FIG. 13 illustrates an example of a three-dimensional image displayed on the display device of FIG. 1;
FIG. 14 illustrates the three-dimensional image on which refractive index information at a target position is displayed;
FIG. 15 illustrates the three-dimensional image on which the refractive index information and a graph are displayed;
FIG. 16 is a flowchart of another refractive-index displaying processing;

FIG. 17 is a flowchart of spherical-aberration correcting processing;

FIG. 18 is a flowchart of target-value calculating processing;

FIG. 19A illustrates a plurality of evaluation values obtained according to a plurality of set values that are determined initially in the target-value calculating processing;

FIG. 19B illustrates a plurality of evaluation values obtained according to a plurality of set values that are determined at the second time in the target-value calculating processing;

FIG. 20 illustrates an example in which a region target value is calculated for each region of image data;

FIG. 21 is a flowchart of another target-value calculating processing;

FIG. 22 is a diagram for explaining the target-value calculating processing of FIG. 21;

FIG. 23 illustrates an example of a configuration of a microscopy system according to a second embodiment; and

FIG. 24 illustrates an example of a configuration of a microscopy system according to a third embodiment.

## Description of the Embodiments

<First Embodiment>

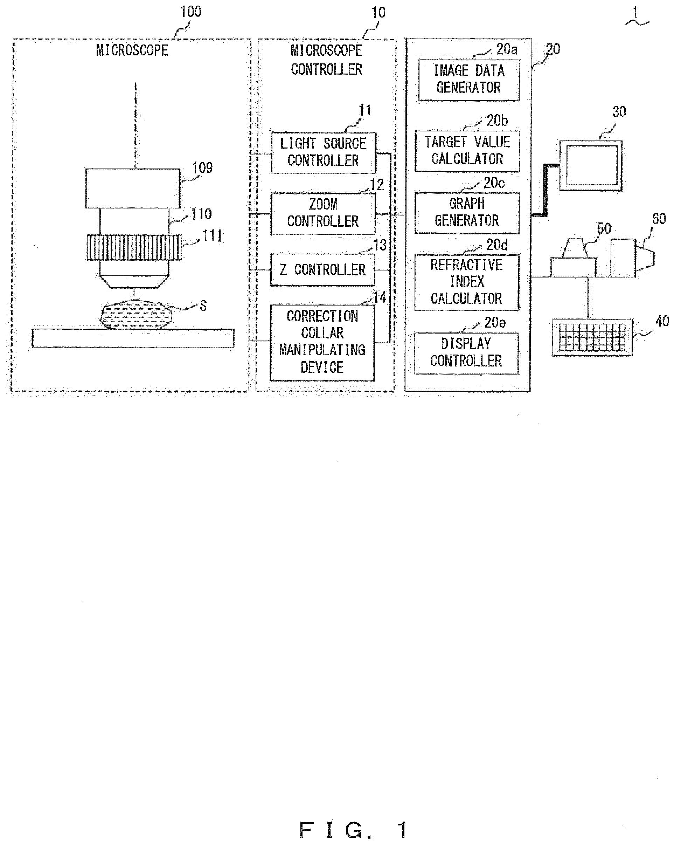

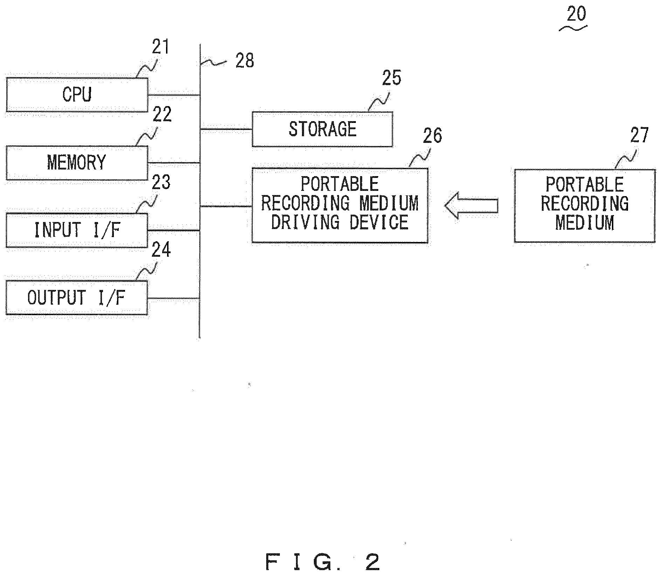

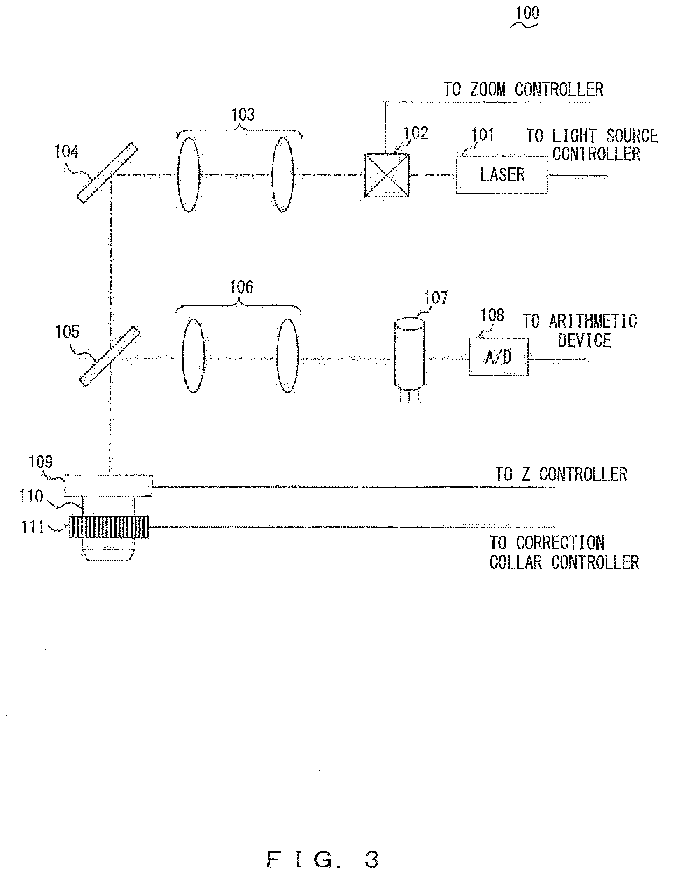

FIG. 1 illustrates an example of a configuration of a microscopy system 1 according to the present embodiment. FIG. 2 illustrates an example of a configuration of an arithmetic device 20 of FIG. 1. FIG. 3 illustrates an example of a configuration of a microscope 100 of FIG. 1.

The microscopy system 1 of FIG. 1 includes the microscope 100, a microscope controller 10, the arithmetic device 20, a display device 30, and a plurality of input devices (a keyboard 40, a correction collar manipulating device 50, and a Z-driving-unit manipulating device 60) to input instructions to the arithmetic device 20.

The microscope controller 10 is a device that controls an operation of the microscope 100 according to an instruction issued by the arithmetic device 20, and generates a control signal that controls an operation of each electrically powered device of the microscope 100. The microscope controller 10 includes a light source controller 11 that controls an output of a light source, a zoom controller 12 that controls a zoom magnification, a Z controller 13 that controls a position of an observation target plane in a direction of an optical axis (hereinafter simply referred to as a position of an observation target plane), and a correction collar manipulating device 14 that controls a set value of a correction collar 111. In this case, the set value of the correction collar 111 is, for example, a rotation angle of the correction collar 111 relative to a reference position.

The arithmetic device 20 is a computer that performs a variety of arithmetic processing, and for example, as illustrated in FIG. 2, the arithmetic device 20 includes a CPU (central processing unit) 21, a memory 22, an input I/F device 23, an output I/F device 24, a storage 25, and a portable recording medium driving device 26 into which a portable recording medium 27 is inserted, and these components are connected to one another through a bus 28. FIG. 2 illustrates an example of a configuration of the arithmetic device 20, and the arithmetic device 20 is not limited to this configuration.

The CPU 21 performs, for example, arithmetic processing by executing a prescribed program. The memory 22 is, for example, a RAM (random access memory) and temporarily stores therein a program or data stored in the storage 25 or the portable recording medium 27 upon execution of the prescribed program.

The input I/F device 23 receives a signal from the keyboard 40, the correction collar manipulating device 50, and the Z-driving-unit manipulating device 60, or from the display device 30. Further, the input I/F device 23 also receives a signal from an A/D converter 108 of the microscope 100 described later in FIG. 3. The output I/F device 24 outputs a signal to the display device 30 or the microscope controller 10.

The storage 25 is, for example, a hard disk storage and is mainly used to store various pieces of data or a program. The portable recording medium driving device 26 is used to accommodate the portable recording medium 27 such as an optical disk or a CompactFlash®, and the portable recording medium 27 has a role in assisting the storage 25.

The arithmetic device 20 realizes various functions by having the CPU 21 load a program stored in the storage 25 or the portable recording medium 27 into the memory 22 and execute the program. The arithmetic device 20 operates as, for example, means for generating image data on the basis of an output from the microscope 100 (an image data generator 20a), means for calculating a target set value that is a set value of the correction collar 111, with which a spherical aberration is corrected (a target value calculator 20b), means for generating a graph that indicates a relationship between a position of an observation target plane in the optical-axis direction and a target set value (a graph generator 20c), means for calculating a refractive index of a sample S (a refractive index calculator 20d), and means for controlling the display device 30 (a display controller 20e).

The display device 30 is, for example, a liquid crystal display, an organic electroluminescent display, or a CRT display. The display device 30 may include a touch panel sensor, and in that case, the display device 30 also serves as an input device.

The correction collar manipulating device 50 is an input device for specifying a set value of the correction collar 111. When a user specifies a set value of the correction collar 111 using the correction collar manipulating device 50, the correction collar manipulating device 14 changes the set value of the correction collar 111 to the specified value.

The Z-driving-unit manipulating device 60 is an input device for instructing to change the position of an observation target plane. When the user instructs to change the position of an observation target plane using the Z-driving-unit manipulating device 60, the Z controller 13 moves a Z driving unit 109 in the optical-axis direction so as to change the position of an observation target plane.

The microscope 100 is a two-photon excitation microscope. The sample S is, for example, a biological sample of a mouse brain, but it is not limited to the biological sample. As illustrated in FIG. 3, the microscope 100 includes, in an illumination light path, a laser 101, a scanning unit 102, a pupil-projection optical system 103, a mirror 104, a dichroic mirror 105, and the objective 110.

The laser 101 is, for example, an ultrashort pulsed laser, and emits a laser beam in a near infrared region. The output of the laser 101 is controlled by the light source controller 11. In other words, the light source controller 11 is a laser controller that controls a power of a laser beam that is irradiated onto a sample.

The scanning unit 102 is a scanner that two-dimensionally scans the sample S with a laser beam, and includes, for example, a galvanometer scanner or a resonant scanner. A zoom magnification changes if a scan range of the scanning unit 102 changes. The scan range of the scanning unit 102 is controlled by the zoom controller 12.

The pupil-projection optical system 103 is an optical system that projects the scanning unit 102 onto the objective 110 at its pupil position. The dichroic mirror 105 is a light separator that separates an excitation light (a laser beam) and a detected light (fluorescence) from the sample S, and separates a laser beam and fluorescence on the basis of a wavelength.

The objective 110 is a dry objective or an immersion objective provided with the correction collar 111, and is attached to the Z driving unit 109. The Z driving unit 109 is means for moving the objective 110 in the optical-axis direction of the objective 110, and the movement of the Z driving unit 109 (that is, the movement of the objective 110) is controlled by the Z controller 13.

The correction collar 111 is a correction device that moves a lens in the objective 110 by changing a set value of the correction collar 111, so as to correct for a spherical aberration. The set value of the correction collar 111 is changed by the correction collar manipulating device 14 (a correction-device controller). The set value of the correction collar 111 can also be manually changed by directly manipulating the correction collar 111.

The microscope 100 further includes a pupil-projection optical system 106 and a photodetector 107 in a detection light path (a reflection light path of the dichroic mirror 105). A signal output from the photodetector 107 is output to the A/D converter 108.

The pupil-projection optical system 106 is an optical system that projects a pupil of the objective 110 onto the photodetector 107. The photodetector 107 is, for example, a photomultiplier tube (PMT), and outputs an analog signal according to an amount of incident fluorescence. The A/D converter 108 converts an analog signal from the photodetector 107 into a digital signal (a brightness signal) and outputs it to the arithmetic device 20.

In the microscopy system 1 having the above-described configuration, the microscope 100 scans, using the scanning unit 102, the sample S with a laser beam in a direction perpendicular to the optical axis of the objective 110, and detects, using the photodetector 107, fluorescence from each position of the sample S. Then, the arithmetic device 20 generates image data on the basis of a digital signal (a brightness signal) obtained by converting a signal from the photodetector 107, and on the basis of a signal from the scanning unit 102. In other words, in the microscopy system 1, a microscope apparatus that is constituted of the microscope 100 and the arithmetic device 20 obtains image data of the sample S.

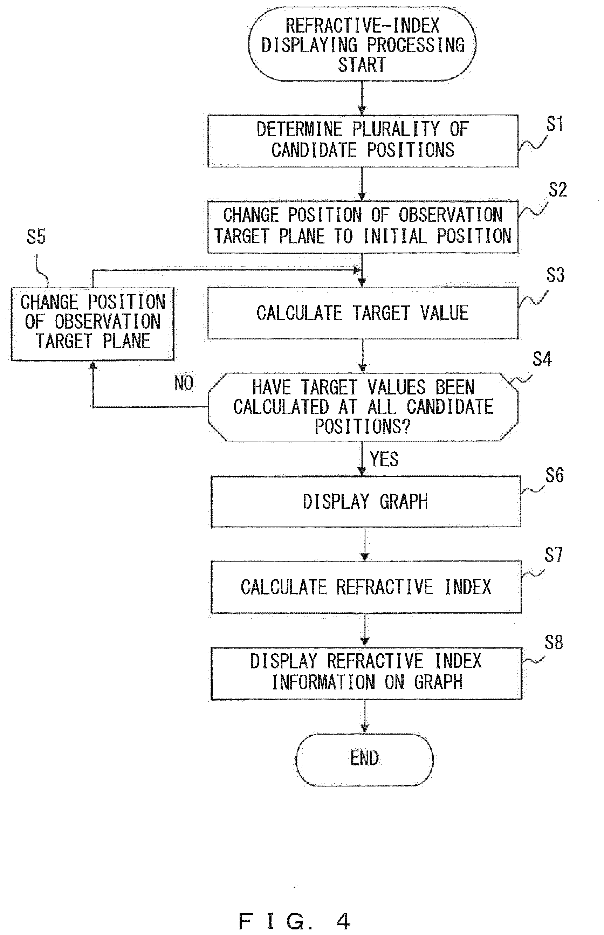

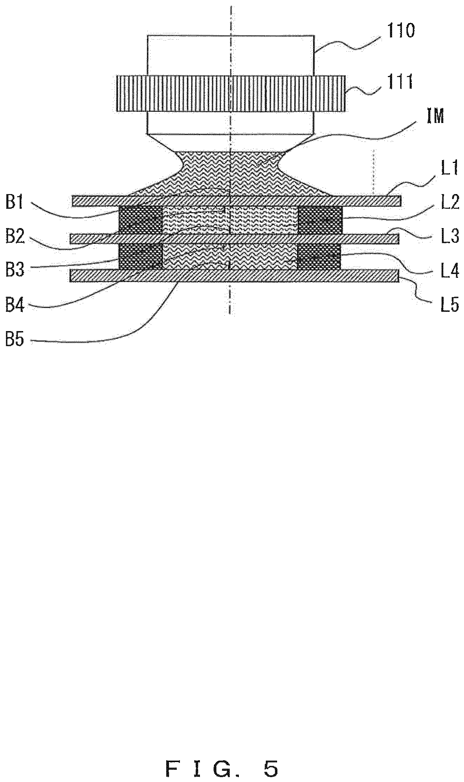

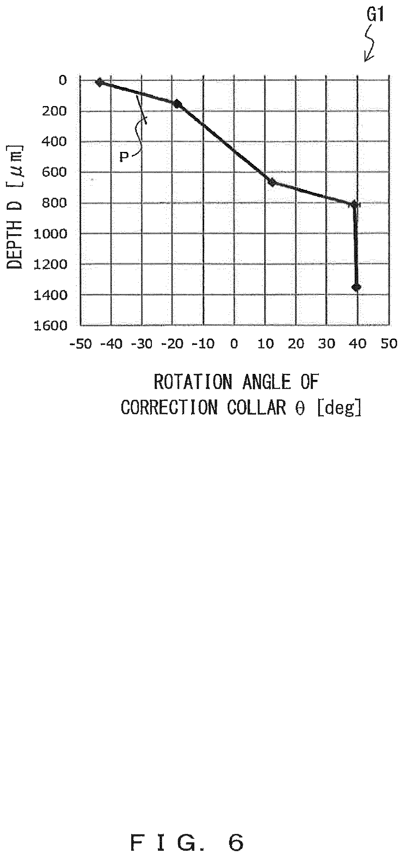

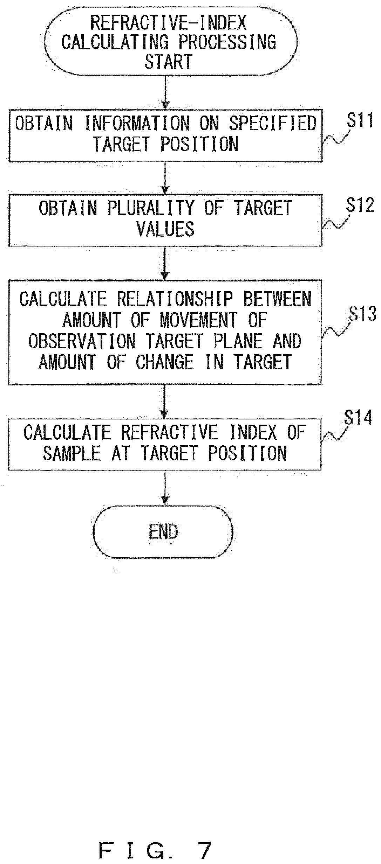

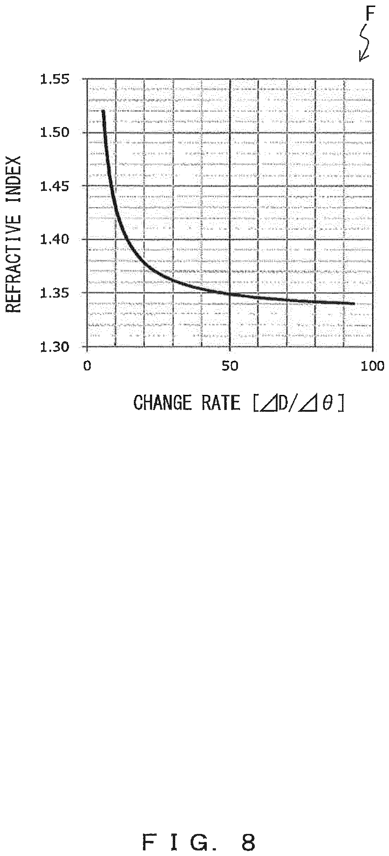

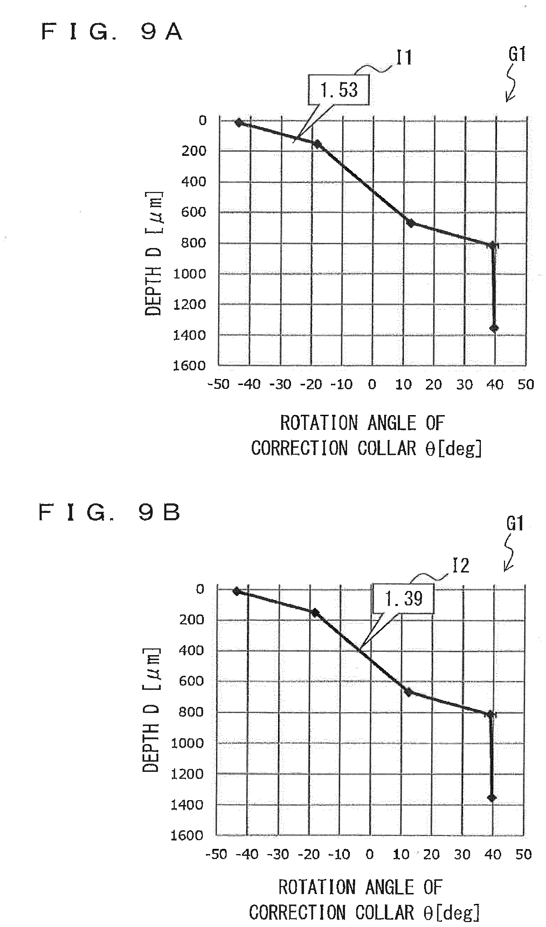

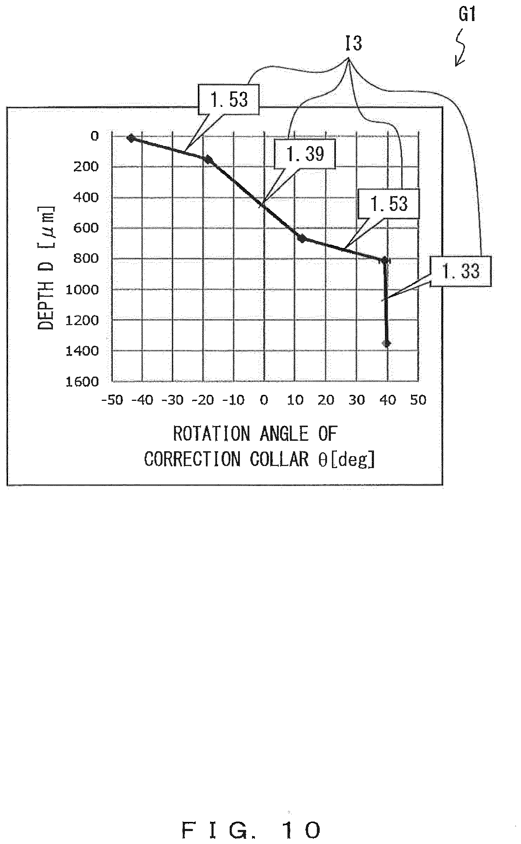

FIG. 4 is a flowchart of the refractive-index displaying processing performed in the microscopy system 1. FIG. 5 illustrates an example of a structure of the sample S. FIG. 6 illustrates an example of a graph displayed on the display device 30 of FIG. 1. FIG. 7 is a flowchart of refractive-index calculating processing performed in the microscopy system 1. FIG. 8 illustrates a relationship between a change rate and a refractive index. FIGS. 9A and 9B illustrate graphs on which pieces of refractive index information at different target positions are displayed. FIG. 10 illustrates a graph on which refractive index information that indicates a refractive index distribution of the sample S is displayed. The refractive-index displaying processing that includes calculating a refractive index of an arbitrary portion of the sample S and displaying information on the refractive index (hereinafter referred to as refractive index information) is described below with reference to FIGS. 4 to 10.

An example in which, as illustrated in FIG. 5, the sample S is a laminated structure that is constituted of a plurality of layers having different refractive indexes (a layer L1 to a layer L5) is described below. FIG. 5 illustrates a structure constituted of five layers, where the layer L1, the layer L3, and the layer L5 are glass plates each having a refractive index of 1.52, the layer L2 is silicone having a refractive index of 1.4, and the layer L4 is water having a refractive index of 1.33. Further, on both of the upper and lower surfaces of the layer L1 and the layer L3, and on the upper surface of the layer L5, a bead B1 to a bead B5 that emit fluorescence when they are irradiated with a laser beam are placed. Furthermore, an immersion liquid IM is filled in between the objective 110 and the sample S. The immersion liquid IM is water having a refractive index of 1.33.

First, the microscopy system 1 determines a plurality of candidate positions that are candidates for a position of an observation target plane in which observation is performed by the microscope apparatus (Step S1). In this case, on the basis of information on the depth of an observation target plane that the user input using, for example, the keyboard 40, the arithmetic device 20 determines a plurality of candidate positions at each of which image data is to be obtained. The depth of an observation target plane is a distance in the optical-axis direction from the surface of the sample S to the observation target plane. Pieces of information on the determined plurality of candidate positions (a plurality of pieces of depth information) are stored in the storage 25. For example, the user may input a depth range and an interval in which image data is to be obtained, and then the arithmetic device 20 may determine a plurality of candidate positions from the depth range and the interval. The depth range is a range in the optical direction in which the observation target plane moves. In the present embodiment, the arithmetic device 20 determines five candidate positions at each of which there exists a bead.

Next, the microscopy system 1 changes the position of an observation target plane to an initial positon (Step S2). In this case, according to an instruction issued by the arithmetic device 20, the Z controller 13 moves the Z driving unit 109 in the optical-axis direction so as to change the position of an observation target plane to the initial position, which is one of the plurality of candidate positions determined in Step S1. In the present embodiment, the position of an observation target plane is changed to the position of the bead B1.

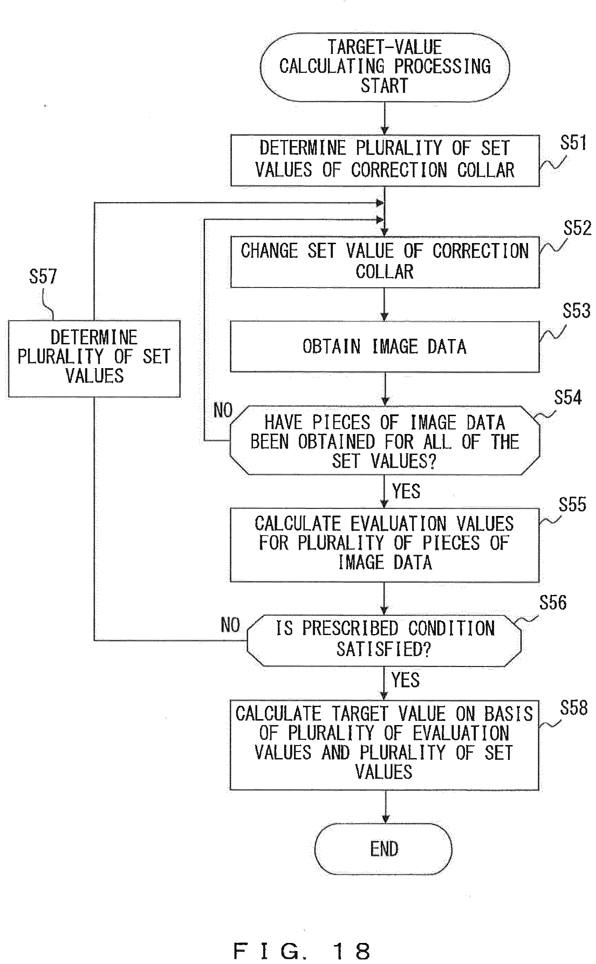

When the position of an observation target plane is changed, the microscopy system 1 calculates a set value of the correction collar 111, with which the spherical aberration in the observation target plane is corrected (hereinafter referred to as a target set value, or simply referred to as a target value) (Step S3). The target value corresponds to an amount of spherical aberration that occurs in the microscope apparatus. In this case, on the basis of a plurality of pieces of image data obtained by the microscope apparatus in a current observation target plane, the arithmetic device 20 calculates a target value that corresponds to an amount of spherical aberration that occurs in the microscope apparatus when the observation target plane is situated at a current candidate position. The calculated target value is stored in the storage 25, associated with information on a candidate position (such as depth information). Processing of calculating a target value will be described in detail later with reference to FIGS. 18 to 22.

When the target value is calculated, the microscopy system 1 determines whether target values have been calculated at all of the plurality of candidate positions determined in Step S1 (Step S4). When target values have not been calculated at all of the candidate positions, the microscopy system 1 changes the position of an observation target plane to a candidate position at which a target value has still not been calculated, the candidate position being included in the plurality of candidate positions determined in Step S1 (Step S5), so as to calculate a target value at the candidate position to which the position of an observation target plane has been changed. (Step S3). The repetition of these processes permits a calculation of a plurality of target values each corresponding to an amount of spherical aberration that occurs in the microscope apparatus when the observation target plane is situated at a different position in the sample S in the optical-axis direction of the objective 110. In the present embodiment, five target values that respectively correspond to amounts of spherical aberration that occurs in the microscope apparatus when the observation target plane is situated at the bead B1 to the bead B5 are calculated.

When target values are calculated at all of the candidate positions, the microscopy system 1 displays a graph that indicates a relationship between a position of an observation target plane and a target value (Step S6). In this case, first, the arithmetic device 20 generates the above-described graph on the basis of the plurality of target values calculated in Step S3, and then displays the generated graph on the display device 30. For example, the graph may be generated by plotting, on a space having a vertical axis that represents the position of an observation target plane and a horizontal axis that represents the target value, points that represent the plurality of target values stored in the storage 25, and by interpolating between two adjacent points. Any interpolation method such as linear interpolation, Lagrange interpolation, or spline interpolation may be used to perform interpolation. Further, the graph may be generated by performing function approximation instead of interpolation. In the present embodiment, as illustrated in FIG. 6, a graph G1 on which five points that represent five calculated target values are plotted and linear interpolation is performed between adjacent points is displayed. In FIG. 6, the vertical axis represents a depth D that is a distance from a sample surface (the upper surface of the layer L1) in the optical-axis direction, and the horizontal axis represents a rotation angle $\theta$ of the correction collar 111.

When the user specifies a point on the graph G1 displayed on the display device 30 using a pointer P and a target position in the sample S is specified as a result of specifying the point, the microscopy system 1 calculates a refractive index of the sample S at the target position (Step S7). In this case, the arithmetic device 20 calculates the refractive index of the sample S at the target position on the basis of the plurality of target values. Specifically, the arithmetic device 20 performs the processing of FIG. 7.

First, the arithmetic device 20 obtains information on the specified target position (Step S11). For example, the arithmetic device 20 obtains depth information on the target position. Next, the arithmetic device 20 obtains a plurality of target values (Step S12). For example, the arithmetic device 20 specifies, from among the plurality of points plotted on the graph, two points that are situated close to the specified point, and obtains target values for those two points. At this point, pieces of depth information are also obtained along with the target values. The plurality of target values obtained in Step S12 are not limited to the target value calculated in Step S3. The plurality of target values and the plurality of pieces of depth information may be obtained by moving the observation target plane to a plurality of positions in the vicinity of the depth of the target position and by calculating a target value at each of the plurality of positions.

After that, the arithmetic device 20 calculates, on the basis of the plurality of target values, a relationship, at the target position, between an amount of movement of the observation target plane in the optical-axis direction (an amount of change in the position of an observation target plane) and an amount of change in a target value (Step S13) . For example, the arithmetic device 20 calculates the ratio of the difference between the two pieces of depth information obtained in Step S12 (an amount of movement of the observation target plane $\Delta D$) to the difference between the two target values obtained in Step S12 (an amount of change in target value $\Delta\theta$). In other words, the arithmetic device 20 calculates a change rate $\Delta D/\Delta\theta$ that is a slope of a graph at the target position.

Finally, the arithmetic device 20 calculates a refractive index of the sample S at the target position on the basis of the relationship calculated in Step S13 (Step S14). For example, on the basis of a function F of a change rate and a refractive index, that is stored in the storage 25 and illustrated in FIG. 8, the arithmetic device 20 calculates a refractive index from the relationship (change rate) calculated in Step S13. The function F of a change rate and a refractive index varies according to an objective, so a function F of a change rate and a refractive index for each objective is preferably stored in the storage 25. Further, instead of the function F, data that indicates a relationship between a change rate and a refractive index may be stored in the storage 25.

When the refractive index is calculated and the processing of FIG. 7 is terminated, the microscopy system 1 displays refractive index information on the graph (Step S8). In this case, the arithmetic device 20 associates, with the graph, information on the refractive index of the sample S at the target position and displays them on the display device 30. In the present embodiment, for example, when a portion at a depth of 150 $\mu$m is specified as a target position by use of a pointer P, refractive index information I1 (1.53) is displayed, on the graph G1, near a point that corresponds to the target position, as illustrated in FIG. 9A. Further, when a portion at a depth of 400 $\mu$m is specified as a target position by use of the pointer P, refractive index information I2 (1.39) is displayed, on the graph G1, near a point that corresponds to the target position, as illustrated in FIG. 9B. The positions at depths of 150 $\mu$m and 400 $\mu$m are respectively included in the layer L1 (glass plate, refractive index of 1.52) and the layer L2 (silicone, refractive index of 1.4) illustrated in FIG. 5.

As described above, the microscopy system 1 according to the present embodiment permits a calculation of a refractive index of an arbitrary portion in a sample. For example, even when the sample has a complicated refractive index distribution, such as a laminated structure that is constituted of a plurality of layers having different refractive indexes, as illustrated in FIG. 5, it is possible to accurately calculate a refractive index of an arbitrary portion regardless of a structure of the sample. This will be described in detail later. Further, it is possible to calculate a refractive index of a deep portion of a sample without slicing the sample, which permits an in vivo measurement of a refractive index of a biological sample.

Further, in the microscopy system 1, a refractive index of a sample is calculated by use of information obtained by the correction collar 111 correcting for a spherical aberration. Thus, the refractive index can be measured while correcting for a spherical aberration and observing a deep portion of the sample. As a result, the microscopy system 1 is particularly suitable for using for an in vivo observation of a biological sample, in which a mitigation of damage to a sample is important.

Furthermore, in the microscopy system 1, a graph is displayed that indicates a relationship between a position of an observation target plane and a target value. The slope of the graph is dependent on the refractive index, so if the graph is displayed, the user is able to know, from the graph, a refractive index distribution of a sample, such as a biological sample, that has a refractive index that varies according to the depth. Further, if refractive index information is displayed on the graph, it is possible to know the refractive index more accurately. FIGS. 9A and 9B each illustrate an example in which only refractive index information at a specified target position (refractive index information I1, refractive index information I2) is displayed on the graph G1, but as illustrated in FIG. 10, refractive index information I3 that indicates a refractive index distribution of a sample may be displayed on the graph G1 regardless of whether a target position is specified. This results in displaying a refractive index at each depth of the sample, so it is possible to know the refractive index distribution of the sample more accurately.

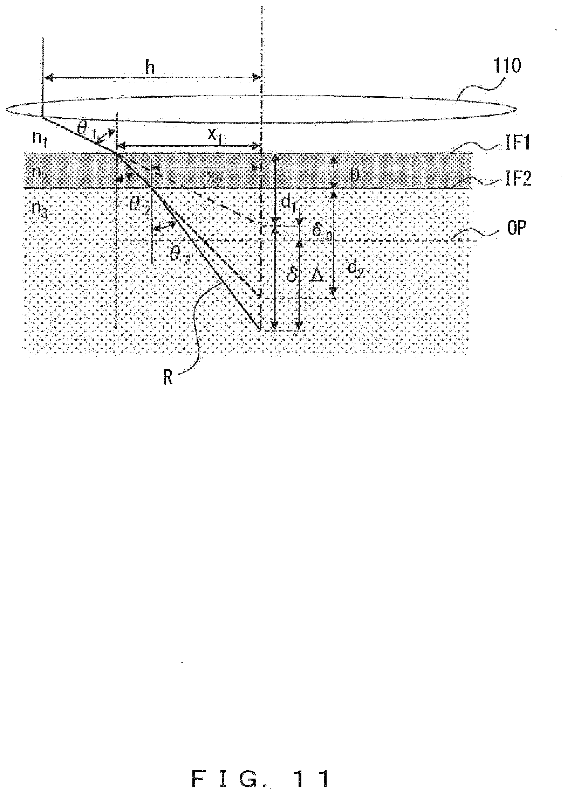

FIG. 11 is a diagram for explaining a method for calculating a refractive index. Referring to FIG. 11, the following explains in detail that a refractive index of an arbitrary portion in a sample can be accurately calculated regardless of a structure of the sample.

An example in which, as illustrated in FIG. 11, the observation target plane is situated in a third layer that is the third layer from the objective 110 and that is constituted of a medium having a refractive index n3 is described below. A first layer that is adjacent to the objective 110 and that is constituted of a medium having a refractive index n1 is, for example, air or an immersion liquid, and a second layer constituted of a medium having a refractive index n2 and the third layer constituted of a medium having refractive index n3 are, for example, a biological sample.

When an angle of incidence of a ray R from the objective 110 into an interface IF1 situated between the first layer and the second layer is θ1, an angle of exit from the interface IF1 is θ2, and an angle of exit from an interface IF2 situated between the second layer and the third layer is θ3, Formula (1) below is derived by Snell's law.

$$n_1 \sin\theta_1 = n_2 \sin\theta_2 = n_3 \sin\theta_3 \qquad (1)$$

Further, the following relationships are also geometrically derived from FIG. 11. D is a thickness of the second layer.

$$d_1 \tan\theta_1 = x_1$$

$$d_2 \tan\theta_2 = x_2$$

$$D \tan\theta_2 = x_1 - x_2$$

$$(d_1 - D + \delta) \tan\theta_3 = x_2$$

On the basis of these relationships, δ is represented by Formula (2) below.

$$\delta = d_2 \frac{\tan\theta_2}{\tan\theta_3} + D - d_1 \qquad (2)$$

Further, the following relationship is also geometrically derived from FIG. 11.

$$D \tan\theta_2 = x_1 - x_2$$
$$= d_1 \tan\theta_1 - d_2 \tan\theta_2$$

On the basis of this relationship, $d_2$ is represented by Formula (3) below.

$$d_2 = \left( \frac{d_1 \tan\theta_1}{\tan\theta 2} - D \right) \qquad (3)$$

Further, when Formula (2) is modified using Formula (3), Formula (4) is derived.

$$\delta = \left( \frac{d_1 \tan\theta_1}{\tan\theta_2} - D \right) \frac{\tan\theta_2}{\tan\theta_3} + D - d_1$$
$$= d_1 \left( \frac{\tan\theta_1}{\tan\theta_3} - 1 \right) - D \left( \frac{\tan\theta_2}{\tan\theta_3} - 1 \right) \qquad (4)$$

Here, the following relationships are derived from Formula (1).

$$\frac{\tan\theta_1}{\tan\theta_3} = \frac{\sin\theta_1 / \cos\theta_1}{\sin\theta_3 / \cos\theta_3} = \frac{\sin\theta_1\sqrt{1-\sin^2\theta_3}}{\sin\theta_3\sqrt{1-\sin^2\theta_1}} = \sqrt{\frac{n_3^2 - n_1^2\sin^2\theta_1}{n_1^2 - n_1^2\sin^2\theta_1}}$$

$$\frac{\tan\theta_2}{\tan\theta_3} = \frac{\sin\theta_2 / \cos\theta_2}{\sin\theta_3 / \cos\theta_3} = \frac{\sin\theta_2\sqrt{1-\sin^2\theta_3}}{\sin\theta_3\sqrt{1-\sin^2\theta_2}} = \sqrt{\frac{n_3^2 - n_1^2\sin^2\theta_1}{n_2^2 - n_1^2\sin^2\theta_1}}$$

When Formula (4) is modified using these relationships, Formula (5) is derived.

$$\delta = d_1\left(\sqrt{\frac{n_3^2 - n_1^2\sin^2\theta_1}{n_1^2 - n_1^2\sin^2\theta_1}} - 1\right) - D\left(\sqrt{\frac{n_3^2 - n_1^2\sin^2\theta_1}{n_2^2 - n_1^2\sin^2\theta_1}} - 1\right) \qquad (5)$$

When D=0, $\delta$ is not dependent on the parameter of the second layer. Further, when $\theta_1$=0, Formula (5) is dependent only on a refractive index difference (refractive index ratio). The amount of paraxial movement $\delta_0$ that is $\delta$ when $\theta_1$=0 is represented by Formula (6).

$$\delta_0 \equiv \delta\left(\theta_1 = 0\right)$$
$$= d_1\left(\frac{n_3}{n_1} - 1\right) - D\left(\frac{n_3}{n_2} - 1\right) \qquad (6)$$

An amount of spherical aberration $\Delta$ that occurs in the ray R is a difference between $\delta$ and $\delta_0$. Thus, Formula (7) is derived from Formula (5) and Formula (6). An amount of spherical aberration that occurs in the microscope apparatus is calculated by integrating Formula (7) with respect to $\theta_1$ from 0 to a maximum incident angle $\theta_{max}$ determined by an NA of the objective 110.

$$\Delta = d_1\left(\sqrt{\frac{n_3^2 - n_1^2\sin^2\theta_1}{n_1^2 - n_1^2\sin^2\theta_1}} - \frac{n_3}{n_1}\right) - D\left(\sqrt{\frac{n_3^2 - n_1^2\sin^2\theta_1}{n_2^2 - n_1^2\sin^2\theta_1}} - \frac{n_3}{n_2}\right) \qquad (7)$$

Further, Formula (8) is derived by differentiating Formula (7) with respect to $d_1$. Formula (8) represents a rate of change in the amount of spherical aberration that is defined by an amount of change in the amount of spherical aberration per amount of change in the depth of an observation target plane.

$$\frac{d\Delta}{dd_1} = \sqrt{\frac{n_3^2 - n_1^2\sin^2\theta_1}{n_1^2 - n_1^2\sin^2\theta_1}} - \frac{n_3}{n_1} \qquad (8)$$

Formula (8) does not include the parameter of the second layer. From this, it is understood that the rate of change in the amount of spherical aberration is dependent on the first layer and the third layer that includes an observation target plane, and is not affected by the second layer that is an intermediate layer. Further, $\theta_1$ is an integration variable, and $n_1$ is a refractive index of a medium placed between the objective 110 and the sample S, and is generally determined according to the objective 110. In view of the foregoing, it is understood that a refractive index $n_3$ of the third layer that includes an observation target plane can be calculated using Formula (8) if the rate of change in the amount of spherical aberration is determined. As a result, if the rate of change in the amount of spherical aberration is determined, a refractive index of an arbitrary portion can be accurately calculated regardless of a structure of the sample.

In the microscopy system 1, a rate of change in target value of the correction collar 111 (a relationship between an amount of movement of the observation target plane and an amount of change in target value) is calculated instead of directly calculating a rate of change in the amount of spherical aberration. When an objective is fixed, a relationship between a target value and an amount of spherical aberration remains a known constant relationship, so it is possible to change the rate of change in spherical aberration to the rate of change in target value. Thus, also in the microscopy system 1 that calculates a refractive index from a rate of change in target value, it is possible to accurately calculate a refractive index of an arbitrary portion regardless of a structure of a sample.

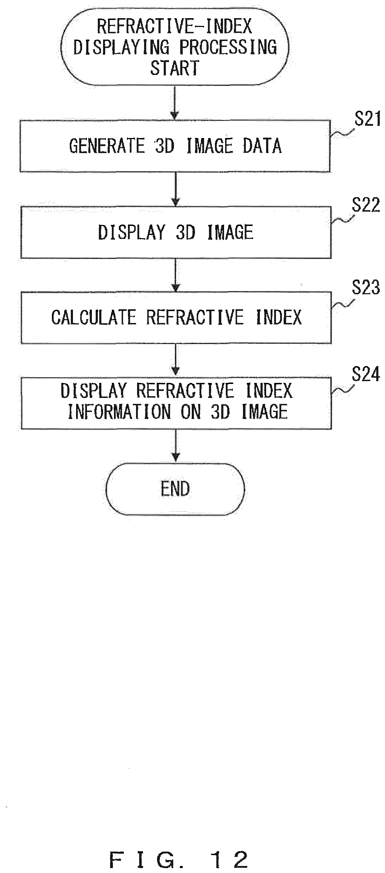

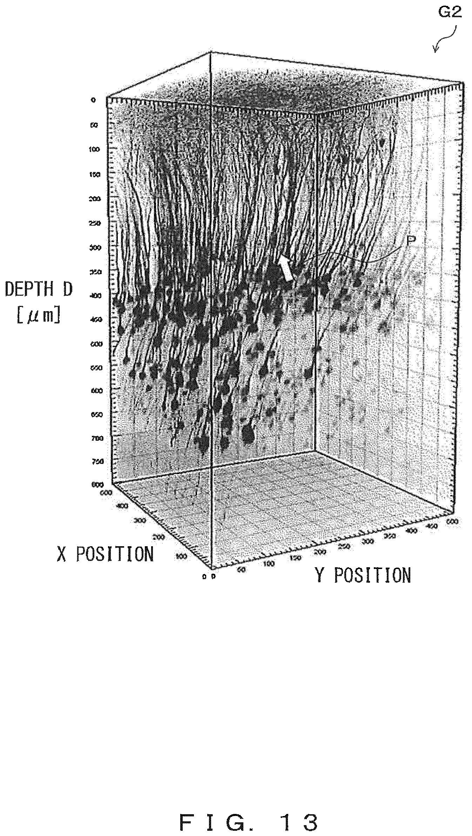

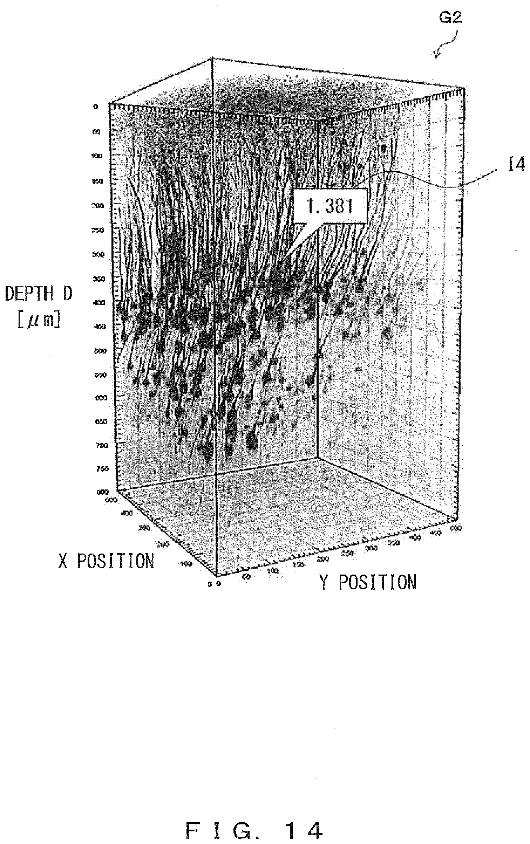

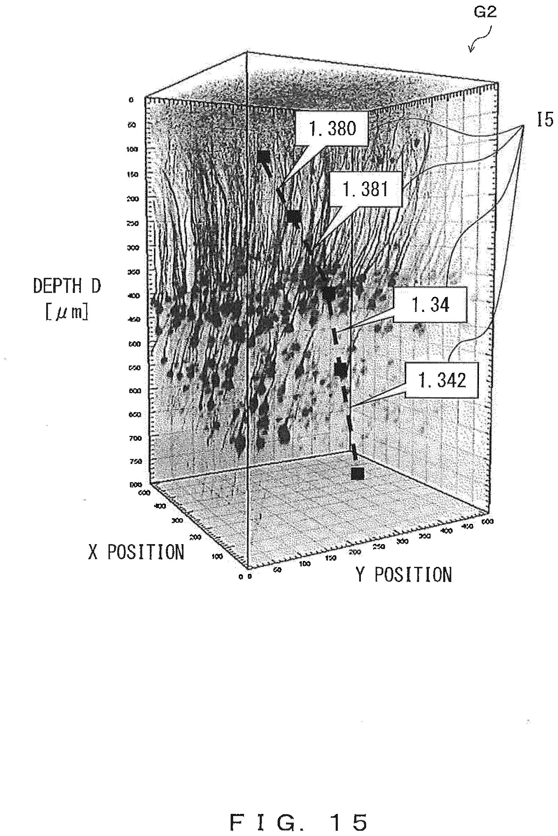

FIG. 12 is a flowchart of another refractive-index displaying processing performed in the microscopy system 1. FIG. 13 illustrates an example of a three-dimensional image G2 displayed on the display device 30 of FIG. 1. FIG. 14 illustrates the three-dimensional image G2 on which refractive index information at a target position is displayed. FIG. 15 illustrates the three-dimensional image on which the refractive index information and a graph are displayed. The refractive-index displaying processing of displaying refractive index information on a three-dimensional image is described below with reference to FIGS 12 to 15. In this case, the sample S is a mouse brain.

The microscopy system 1 generates three-dimensional image data of the sample S (Step S21). In this case, first, on the basis of information that a user input using, for example, the keyboard 40, the arithmetic device 20 determines a depth range, in the optical-axis direction, in which a three-dimensional image is to be generated. Next, according to an instruction issued by the arithmetic device 20, the Z controller 13 moves the Z driving unit 109 in the optical-axis direction, so as to move, in turn, the observation target plane to a plurality of positions in the determined range. Then, the microscope apparatus obtains image data of the sample S at each position. The arithmetic device 20 generates three-dimensional image data of the sample S on the basis of the pieces of image data (pieces of Z-stacked image data) obtained at the plurality of positions.

Next, the microscopy system 1 displays a three-dimensional image of the sample S (Step S22) . In this case, on the basis of the three-dimensional image data of the sample S, the arithmetic device 20 displays the three-dimensional image of the sample S on the display device 30. In the present embodiment, for example, a three-dimensional image G2 of a mouse brain in which there is a change in structure in a depth direction is displayed, as illustrated in FIG. 13.

Using a pointer P, the user specifies a point on the three-dimensional image G2 displayed on the display device 30, and when a target position in the sample S is specified as a result of specifying the point, the microscopy system 1 calculates a refractive index of the sample S at the target position (Step S23). This processing is similar to the refractive-index displaying processing of FIG. 7. However, in Step S12 of FIG. 7, a plurality of target values and a plurality of pieces of depth information are obtained by moving the observation target plane to a plurality of positions in the vicinity of the depth of the target position and by calculating a target value at each of the plurality of positions.

When the refractive index is calculated, the microscopy system 1 displays refractive index information on the three-dimensional image G2 (Step S24). In this case, the arithmetic device 20 associates, with the three-dimensional image G2, information on the refractive index of the sample S at the target position and displays them on the display device 30. In the present embodiment, for example, refractive index information I4 (1.38) is displayed at the target position on the three-dimensional image G2, as illustrated in FIG. 14.

As described above, the microscopy system 1 can associate, with a three-dimensional image, a refractive index of the sample S at a target position and display them. This makes it possible to easily know a relationship between a structure of the sample S and a refractive index. Further, a target position can be specified while viewing an image, so it is possible to specify with certainty a portion for which a refractive index needs to be known. Furthermore, it may be configured such that a user can specify a target range having a width in a depth direction while viewing a three-dimensional image. Then, a relationship between an amount of movement of the observation target plane and an amount of change in target value within the target range may be calculated, so as to calculate a refractive index distribution within the target range.

Further, the refractive-index displaying processing of FIG. 4 and the refractive-index displaying processing of FIG. 12 may be combined. For example, the processes of Step S1 to Step S5 of FIG. 4 may be performed before Step S21 of FIG. 12, so as to display refractive index information I5 and a graph on the three-dimensional image G2, as illustrated in FIG. 15. This makes it possible to know in more detail a relationship between a structure of the sample S and a refractive index.

Further, refractive index information is not limited to text-based information as illustrated in FIGS. 14 and 15. For example, refractive index information may be provided to a user by changing the color of the three-dimensional image G2. In this case, portions in the image that have different refractive indexes are represented by use of different colors. Further, the color of a graph may be changed instead of changing the color of an image itself. If refractive index information is provided using a color, the user is able to grasp a refractive index more intuitively.

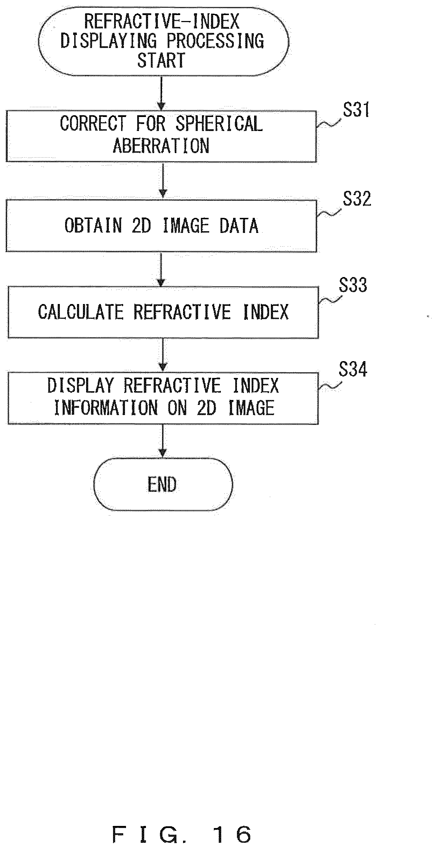

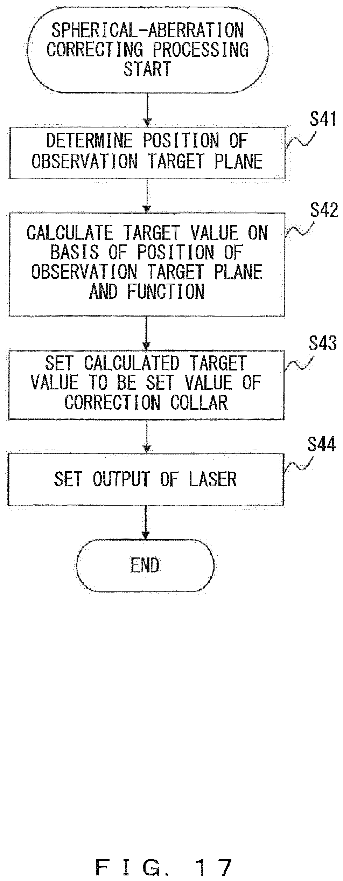

FIG. 16 is a flowchart of yet another refractive-index displaying processing performed in the microscopy system 1. FIG. 17 is a flowchart of spherical-aberration correcting processing performed in the microscopy system 1. The refractive-index displaying processing of displaying refractive index information on a two-dimensional image is described below with reference to FIGS. 16 and 17.

The microscopy system 1 corrects for a spherical aberration (Step S31). In this case, the microscopy system 1 corrects for a spherical aberration that occurs in the microscope apparatus. Specifically, the microscopy system 1 performs the processing of FIG. 17.

First, the microscopy system 1 determines a position of an observation target plane, at which image data is to be obtained (Step S41). In this case, for example, a user manipulates the Z-driving-unit manipulating device 60 so as to specify the position of an observation target plane. Accordingly, the arithmetic device 20 receives information on the specified position of an observation target plane (depth information) from the Z-driving-unit manipulating device 60, so as to determine the position of an observation target plane.

Next, the microscopy system 1 calculates a target value on the basis of a position of an observation target plane and a function indicating a relationship between the position of an observation target plane and a target value (Step S42). In this case, the arithmetic device 20 calculates a target value in a current observation target plane on the basis of the position of an observation target plane that has been determined in Step S41 and the function stored in the storage 25 in advance. The function indicating a relationship between a position of an observation target plane and a target value is, for example, a function represented on the graph G1 of FIG. 6, and is calculated by a procedure similar to that of the generation of the graph G1 (Step S1 to Step S6 of FIG. 4). In other words, the observation target plane is moved, in turn, to positions of different depths of the sample S, and a plurality of pieces of image data are obtained at the respective positions. Then, a target value of each position is calculated from the plurality of pieces of image data obtained at the corresponding position. On the basis of the plurality of target values calculated in this way and the plurality of positions of an observation target plane, the function is calculated using interpolation or function approximation.

When a target value is calculated, the microscopy system 1 sets the target value to be the set value of the correction collar 111 (Step S43). In this case, the correction collar manipulating device 14 changes the set value of the correction collar 111 to the target value calculated in Step S42. The correction collar manipulating device 14 may automatically, that is, according to an instruction issued by the arithmetic device 20, change the set value of the correction collar 111 to the target value calculated in Step S42. Further, the correction collar manipulating device 14 may manually change the set value of the correction collar 111 to the target value calculated in Step S42, that is, the correction collar manipulating device 14 may change the set value of the correction collar 111 to the target value calculated in Step S42, by displaying the calculated target value on the display device 30 and by the user manipulating the correction collar manipulating device 50 on the basis of the displayed target value. Further, the user may directly manipulate the correction collar 111 so as to change the set value of the correction collar 111 to the target value.

Finally, the microscopy system 1 sets the output of the laser 101 (Step S44) and terminates the spherical-aberration correcting processing. In this case, on the basis of image data obtained in the microscope apparatus when the set value of the correction collar 111 is a target value, the light source controller 11 controls a power of a laser beam that is irradiated onto the sample S. For example, image data is obtained after the set value of the correction collar 111 is changed in Step S43, and the output of the laser 101 is set on the basis of the brightness of an image that is calculated from the image data.

When the spherical-aberration correcting processing is terminated, the microscopy system 1 obtains two-dimensional image data of the sample S (Step S32). In this case, according to an instruction issued by the arithmetic device 20, the Z controller 13 moves the Z driving unit 109 in the optical-axis direction, so as to move the observation target plane to the position determined in Step S42. Then, the microscope apparatus obtains image data of the sample S.

Next, the microscopy system 1 calculates a refractive index (Step S33). In this case, the arithmetic device 20 calculates a refractive index of a current observation target plane of the sample S. For example, the slope of the function at the position of the current observation target plane may be calculated so as to calculate the refractive index on the basis of the slope, the function having been used in Step S42 of FIG. 17. The slope of the function corresponds to the change rate calculated in Step S13.

When the refractive index is calculated, the microscopy system 1 displays refractive index information on a two-dimensional image (Step S34). In this case, the arithmetic device 20 associates, with the two-dimensional image obtained in Step S32, information on the refractive index of the sample S and displays them on the display device 30.

As described above, the microscopy system 1 can display refractive index information on a two-dimensional image. This enables a user to know a refractive index of an observation target plane while observing a sample. Further, the microscopy system 1 can correct for a spherical aberration that varies according to the depth of an observation target plane. This permits the microscopy system 1 to fully utilize an optical performance of the microscope 100 to obtain a high-quality image. Furthermore, the microscopy system 1 can calculate a target value in a current observation target plane with a simple calculation on the basis of a function calculated in advance. Thus, even when a sample is observed while changing the depth for observation frequently, it is possible to change, in a short time, the set value of the correction collar 111 to a target value according to the depth. Further, an adjustment operation of the correction collar 111 can be automated, so the adjustment operation can easily be incorporated into other automated processing such as processing including obtaining pieces of image data at a plurality of positions of different depths and generating a three-dimensional image or an extended focus image automatically. Moreover, in general, in a state in which a spherical aberration has been corrected, an image brighter than that in a state in which a spherical aberration has not been corrected is obtained. Thus, if the output of the laser 101 is set on the basis of the image data obtained in a state in which a spherical aberration has been corrected, it is possible to suppress the output of the laser 101 and to prevent damage to a biological sample.

The target-value calculating processing performed in Step S3 of FIG. 4 is specifically described below. FIG.

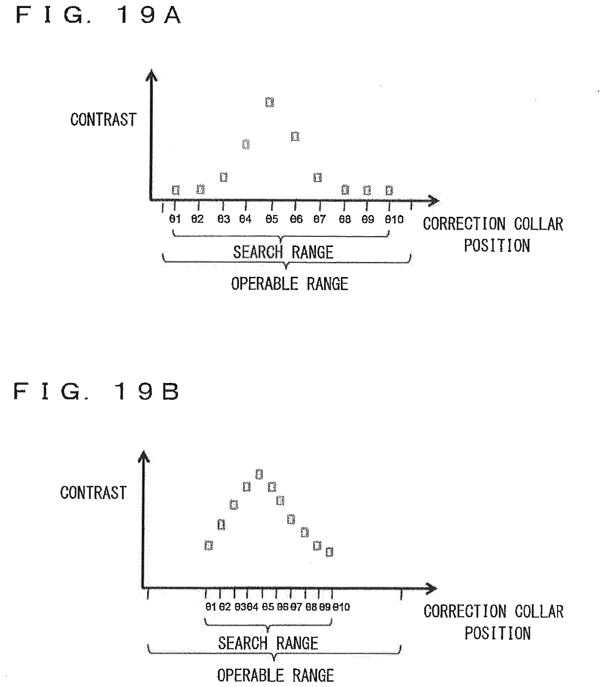

18 is a flowchart of the target-value calculating processing performed in the microscopy system 1 for each candidate position. FIGS. 19A and 19B are diagrams for explaining the target-value calculating processing of FIG. 18. FIG. 19A illustrates a plurality of evaluation values obtained by using a plurality of set values that are determined initially, and FIG. 19B illustrates a plurality of evaluation values obtained by using a plurality of set values that are determined at the second time.

First, the microscopy system 1 determines a plurality of set values of the correction collar 111 (Step S51). In this case, the arithmetic device 20 determines plural set values of the correction collar 111 when image data of the sample is obtained by the microscope apparatus. For example, as illustrated in FIG. 19A, the arithmetic device 20 determines, to be a search range, a range in which the correction collar 111 can rotate (an operable range) or a range that is a little narrower than the operable range, and determines, to be a plurality of set values, a predetermined number of (here, ten) set values (correction collar positions), wherein the search range is equally divided into the predetermined number. FIG. 19A illustrates an example in which ten set values (correction collar positions) from $\theta 0$ to $\theta 10$ are determined.

Next, the microscopy system 1 changes the set value of the correction collar 111 to a set value determined in Step S51 (Step S52) . In this case, according to an instruction issued by the arithmetic device 20, the correction collar manipulating device 14 sets the set value to one of the plurality of set values determined in Step S51. For example, the correction collar manipulating device 14 changes the set value of the correction collar 111 to $\theta 1$.

When the set value of the correction collar 111 is changed, the microscopy system 1 obtains image data of the sample S (Step S53). In this case, the microscope apparatus obtains the image data according to an instruction issued by the arithmetic device 20. For example, the microscope apparatus obtains image data in a state in which the set value of the correction collar 111 is $\theta 1$.

After that, the microscopy system 1 determines whether pieces of image data have been obtained for all of the set values determined in Step S51 (Step S54), and repeats the processes of Step S52 to Step S54 when pieces of image data have not been obtained for all of the set values. Accordingly, the microscope apparatus obtains image data of an observation target plane of the sample S in each of the plurality of states in which different set values are respectively set in the correction collar 111, so as to obtain a plurality of pieces of image data.

When pieces of image data have been obtained for all of the set values, the microscopy system 1 calculates an evaluation value for each of the plurality of pieces of image data obtained in Step S53 (Step S55). In this case, the arithmetic device 20 calculates, on the basis of each of the plurality of pieces of image data, an evaluation value for image data that is larger if a spherical aberration has been corrected, so as to calculate a plurality of evaluation values for the plurality of pieces of image data. In general, image data having a corrected spherical aberration has a higher contrast, so, for example, a contrast value that is calculated by a contrast evaluation with respect to image data is used as an evaluation value. FIG. 19A illustrates evaluation values for the plurality of pieces of image data obtained in Step S53. In FIG. 19A, image data is determined according to a correction collar position (a set value of the correction collar 111), and the evaluation value for the image data is represented by a contrast value.

The contrast value obtained by a contrast evaluation is calculated on the basis of a difference in brightness value between pixels that constitute image data. Specifically, for example, a value obtained by integrating, over the entirely of image data, the square of a difference in brightness value between two pixels that are situated in positions shifted from each other by n pixels in an x-direction is calculated as a contrast value using the following formula.

$$\sum_{y=1}^{H} \sum_{x=1}^{W-n} \left\{ f\left(x,y\right) - f\left(x+n,y\right) \right\}^2$$

Here, x is a variable that identifies a column of pixels that constitute the image data, and y is a variable that identifies a row of pixels that constitute the image data. W is the number of pixels (that is, the number columns of pixels), in the x-direction, that constitute the image data, and H is the number of pixels (that is, the number of rows of pixels), in a y-direction, that constitute the image data. f is a brightness value of a pixel, and n is an integer (such as two).

When evaluation values are calculated, the microscopy system 1 determines whether they satisfy a prescribed condition (Step S56). The prescribed condition may be whether the number of repetitions of the processes of Step S52 to Step S56 reaches a prescribed number of times, or it may be whether an average interval of the plurality of set values is not greater than a prescribed value.

When the prescribed condition is not satisfied in Step S56, the microscopy system 1 determines a plurality of set values again (Step S57), and then repeats the processes of Step S52 to Step 56.

In Step S57, the arithmetic device 20 determines a plurality of set values so that the following two conditions are satisfied. A first condition is that a distribution range (that is, a search range) and an average interval of the plurality of set values determined in Step S57 are respectively narrower than the distribution range and the average interval of the previous plurality of set values. A second condition is that a set value of the correction collar 111 that corresponds to a maximum evaluation value from among the evaluation values calculated in Step S55 is included in the distribution range of the plurality of set values determined in Step S57. The set value that corresponds to an evaluation value is herein referred to as a set value of a correction device with respect to an evaluation value calculated from certain image data, which is set when the certain image data is obtained. Further, the evaluation value that corresponds to a set value is referred to as an evaluation value with respect to a set value of the correction device that is set when certain image data is obtained, which is calculated from the certain image data.

Accordingly, the microscope apparatus repeatedly performs processing of obtaining a plurality of pieces of image data in a plurality of states in which different set values are set such that the distribution range and the average interval of a plurality of set values of the correction collar 111 that are set in a plurality of states are made narrower every time the processing is repeated, and such that a set value of the correction collar 111 that corresponds to a maximum evaluation value from among the evaluation values calculated by the arithmetic device 20 is included in the distribution range. Then, the arithmetic device calculates a plurality of evaluation values for a plurality of pieces of image data every time the processing is repeated.

FIG. 19B illustrates evaluation values of a plurality of pieces of image data, the evaluation values being obtained on the basis of the plurality of set values determined in Step S57. In a comparison of FIG. 19B with FIG. 19A, it is confirmed that the plurality of set values (correction collar positions) of FIG. 19B satisfy the above two conditions. Both of FIGS. 19A and 19B illustrate an example in which ten set values (correction collar positions) are determined, but the number of set values is not limited to the same number, but it may be increased or decreased as long as the average interval of a set value is made narrower every time the processing is repeated.

When the prescribed condition is satisfied in Step S56, the microscopy system 1 calculates a target value on the basis of the plurality of evaluation values calculated in Step S55 and a plurality of set values that correspond to the plurality of evaluation values (Step S58), and terminates the target-value calculating processing. In this case, for example, a set value of the correction collar 111 that corresponds to a maximum evaluation value from among the plurality of evaluation values calculated in Step S55 during the last repetition may be calculated as a target value. Further, a set value of the correction collar 111 that corresponds to a maximum evaluation value from among the plurality of evaluation values calculated in Step S55, but not limited to those during the last repetition, may be calculated as a target value. The arithmetic device 20 stores a combination of a calculated target value and a candidate position in the storage 25.

The microscopy system 1 can calculate a target value with a high degree of accuracy with a relatively small number of times of obtaining the image data, by performing the target-value calculating processing of FIG. 18.

For Step S55 of FIG. 18, an example in which an evaluation value is calculated for each piece of image data has been described, but a whole region of image data may be divided into a plurality of regions so as to calculate an evaluation value for each of the regions obtained by the division (hereinafter referred to as a region evaluation value in order to distinguish it from an evaluation value calculated for each piece of image data). In this case, in Step S58, a target value is calculated for each region (hereinafter referred to as a region target value in order to distinguish it from a target value calculated with respect to the whole region), and a target value with respect to the whole region is calculated on the basis of a plurality of region target values.

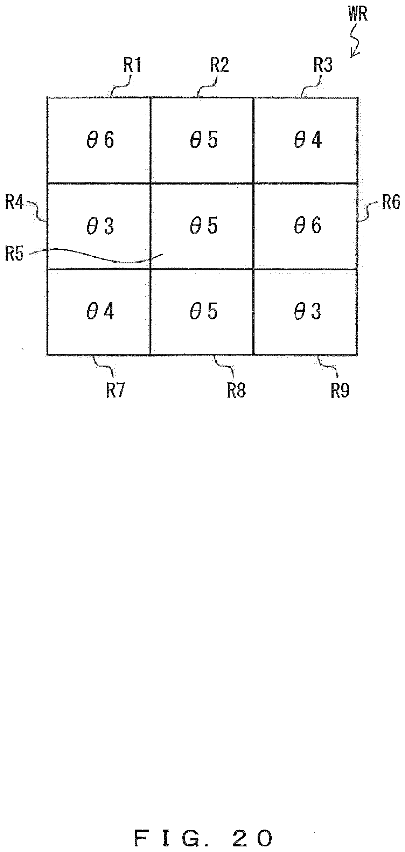

FIG. 20 illustrates an example in which a whole region WR of image data is divided into nine regions from a region R1 to a region R9 and a region target value is calculated for each region. For example, from among the region target values arranged in ascending order or in descending order ($\theta3:\theta3:\theta4:\theta4:\theta5:\theta5:\theta5:\theta6:\theta6$), an intermediate value ($\theta5$) or a mode value ($\theta5$) may be determined to be a target value with respect to the whole region. The number of divisions is not limited to nine, and it may be less than or greater than nine.

If a region target value is calculated for each region and a target value is calculated by performing statistical processing on a plurality of region target values, even when image data includes pixel data having a brightness that is extremely higher or lower than other pieces of pixel data, a contrast of the image data can be evaluated while suppressing the effect of the pixel data. Thus, it is possible to correctly calculate a set value with which a spherical aberration is corrected.

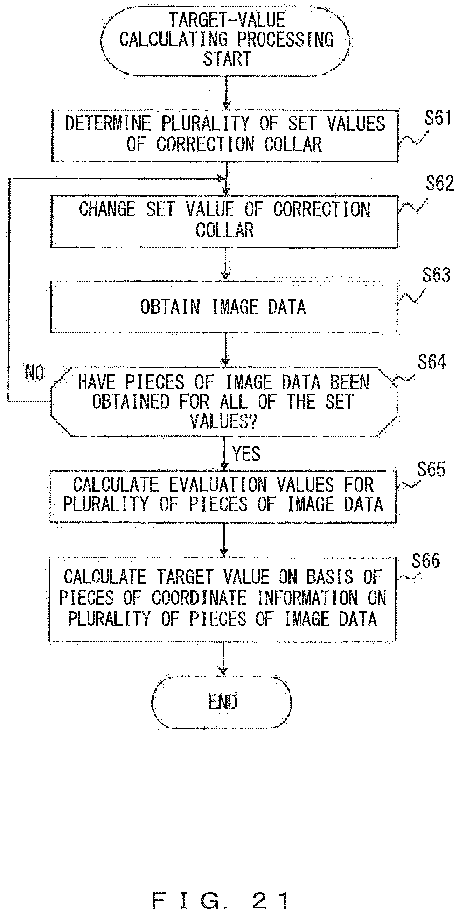

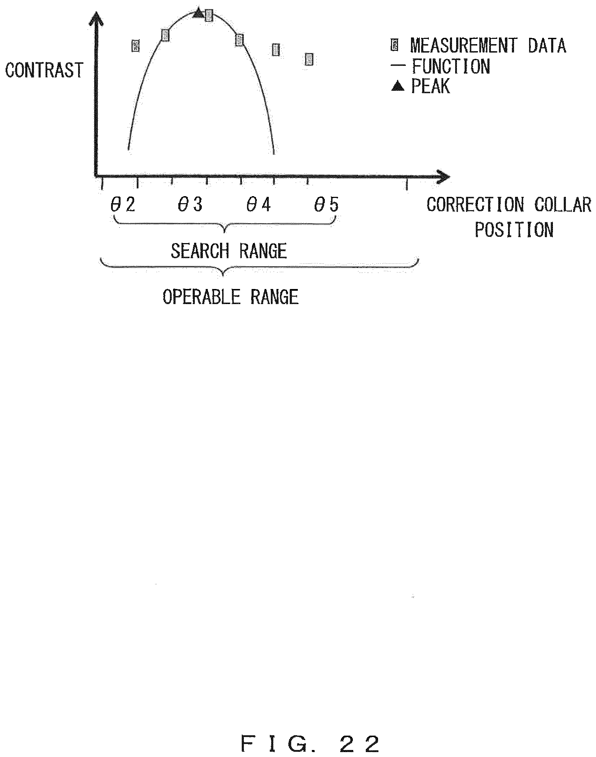

FIG. 21 is a flowchart of another target-value calculating processing performed in the microscopy system 1 for each candidate position. FIG. 22 is a diagram for explaining the target-value calculating processing of FIG. 21. The target-value calculating processing of FIG. 21 is described with reference to FIGS. 21 and 22. The processes of Step S61 to Step S65 of the target-value calculating processing of FIG. 21 are similar to those of Step S51 to Step S55 of the target-value calculating processing of FIG. 18, so detailed descriptions will be omitted.

When evaluation values are calculated in Step S65, the microscopy system 1 calculates a target value on the basis of pieces of coordinate information on a plurality of pieces of image data (Step S66), and terminates the target-value calculating processing. The coordinate information on image data is a combination of an evaluation value calculated from the image data and a set value of the correction collar 111 that corresponds to the evaluation value.

In Step S66, first, the arithmetic device 20 selects three or more pieces of image data from among the plurality of pieces of image data obtained in Step S63. The three or more pieces of image data are selected such that image data from which a maximum evaluation value from among the evaluation values calculated in Step S65 has been calculated is included.

After that, the arithmetic device 20 calculates a target value on the basis of pieces of coordinate information on the selected three or more pieces of image data. Specifically, a function is calculated by performing interpolation or function approximation on the basis of the pieces of coordinate information on the three or more pieces of image data. This function is related to an evaluation value and a set value. Then, a set value obtained from a peak coordinate of the calculated function (a coordinate in which the evaluation value reaches a maximum value) is calculated as a target value. The arithmetic device 20 stores, in the storage 25, a combination of a calculated target value and a candidate position.

FIG. 22 illustrates an example in which three pieces of image data constituted of the image data from which a maximum evaluation value is calculated and pieces of image data before and after that image data (that is, pieces of image data each having a set value close to the set value of that image data) are selected, a quadratic function is calculated by Lagrange interpolation using three pieces of coordinate information obtained from these pieces of image data, and a target value is calculated from the peak coordinate of the quadratic function. Any interpolation method such as Lagrange interpolation or spline interpolation may be used to perform interpolation. Further, any approximation method such as a least-square method may be used to perform function approximation.

The microscopy system 1 can calculate a target value with a high degree of accuracy with a relatively small number of times of obtaining the image data, by performing the target-value calculating processing of FIG. 21.

A target value may be calculated by combining the target-value calculating processing of FIG. 18 and the target-value calculating processing of FIG. 21. For example, the processes of Step S56 and Step S57 of FIG. 18 may be added to the target-value calculating processing of FIG. 21, and a target value may be repeatedly calculated while gradually narrowing a distribution range (that is, a search range) and an average interval of a plurality of set values such that the target value calculated in Step S66 is included in the distribution range. This makes it possible to calculate a target value with a higher degree of accuracy.

<Second Embodiment>

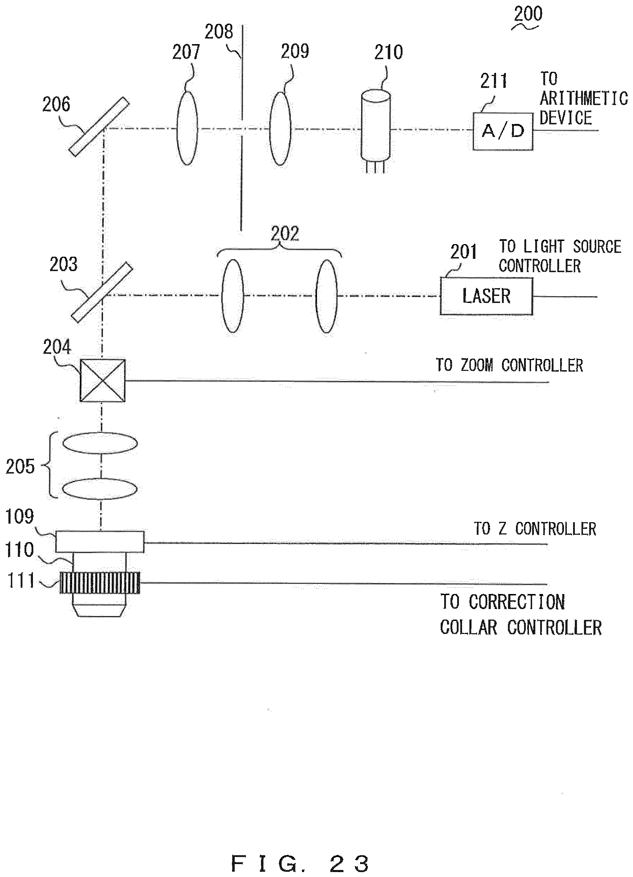

FIG. 23 illustrates an example of a configuration of a microscope 200 according to the present embodiment. A microscopy system according to the present embodiment is different from the microscopy system 1 of FIG. 1 in that it includes the microscope 200 instead of the microscope 100. It is similar to the microscopy system 1 in regard to the other points, so similar reference numerals are used to denote similar components.

The microscope 200 is a confocal microscope. The sample S is, for example, a biological sample of a mouse brain. As illustrated in FIG. 23, the microscope 200 includes, in an illumination light path, a laser 201, a beam expander 202, a dichroic mirror 203, a scanning unit 204, a pupil-projection optical system 205, and the objective 110. The objective 110, the Z driving unit 109 that moves the objective 110 in the optical-axis direction, and the correction collar 111 that is a correction device that moves a lens in the objective 110 so as to correct for a spherical aberration are similar to those of the microscope 100 according to the first embodiment.

The laser 201 emits, for example, a laser beam in a visible region, in an ultraviolet region, or in an infrared region. The output of a laser emitted from the laser 201 is controlled by the light source controller 11. The beam expander 202 is an optical system that adjusts a flux of a laser beam (a collimated beam) from the laser 201 according to a pupil diameter of the correction collar 111. The dichroic mirror 203 is a light separator that separates an excitation light (a laser beam) and a detected light (fluorescence) from the sample S, and separates a laser beam and fluorescence on the basis of a wavelength.

The scanning unit 204 is a scanner that two-dimensionally scans the sample S with a laser beam, and includes, for example, a galvanometer scanner or a resonant scanner. A zoom magnification changes if a scan range of the scanning unit 204 changes. The scan range of the scanning unit 204 is controlled by the zoom controller 12. The pupil-projection optical system 205 is an optical system that projects the scanning unit 204 onto the objective 110 at its pupil position.

The microscope 200 further includes, in a detection light path (a transmission light path of the dichroic mirror 203), a mirror 206, a confocal lens 207, a confocal aperture 208, a light collecting lens 209, and a photodetector 210. A signal output from the photodetector 210 is output to an A/D converter 211.

The confocal lens 207 is a lens that collects fluorescence on the confocal aperture 208. The confocal aperture 208 is an aperture arranged in a position optically conjugate with a focal plane of the objective 110. A pinhole that transmits fluorescence that occurs from a focal position of the objective 110 is formed in the confocal aperture 208. The light collecting lens 209 is a lens that guides, to the photodetector 210, fluorescence that passes through the confocal aperture 208.

The photodetector 210 is, for example, a photomultiplier tube (PMT), and outputs an analog signal according to an amount of incident fluorescence. The A/D converter 211 converts an analog signal from the photodetector 210 into a digital signal (a brightness signal) and outputs it to the arithmetic device 20.

In the microscopy system having the above-described configuration according the present embodiment, the microscope 200 scans the sample S with a laser beam using the scanning unit 204, and detects fluorescence from each position of the sample S using the photodetector 210. Then, the arithmetic device 20 generates image data on the basis of a digital signal (a brightness signal) obtained by converting a signal from the photodetector 210, and on the basis of scanning information on the scanning unit 204. In other words, in the microscopy system according to the present embodiment, the microscope apparatus constituted of the microscope 200 and the arithmetic device 20 obtains image data of the sample S.

The microscopy system according to the present embodiment permits performing of processing that is similar to that of the microscopy system 1 according to the first embodiment. This permits a calculation of a refractive index of an arbitrary portion in a sample.

<Third Embodiment>

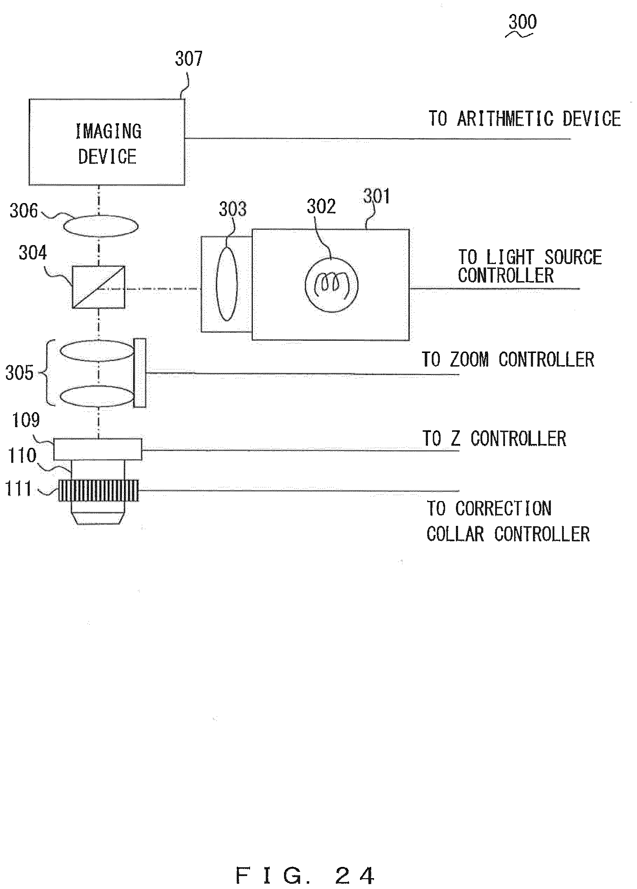

FIG. 24 illustrates an example of a configuration of a microscope 300 according to the present embodiment. A microscopy system according to the present embodiment is different from the microscopy system 1 of FIG. 1 in that it includes the microscope 300 instead of the microscope 100. It is similar to the microscopy system 1 in regard to the other points, so similar reference numerals are used to denote similar components.

The microscope 300 is a common fluorescence microscope, but not a scanning one. The microscope 300 has a zoom function, so it is also called a zooming microscope. The sample S is, for example, a biological sample of a mouse brain. As illustrated in FIG. 24, the microscope 300 includes, in an illumination light path, a lamp house 301 having a light source 302 built in, a collector lens 303, a fluorescence cube 304, a zoom lens 305, and the objective 110. The objective 110, the Z driving unit 109 that moves the objective 110 in the optical-axis direction, and the correction collar 111 that is a correction device that moves a lens in the objective 110 so as to correct for a spherical aberration are similar to those of the microscope 100 according to the first embodiment.

The light source 302 is, for example, an LED light source or a high-power mercury lamp. The output of the light source 302 is controlled by the light source controller 11. The collector lens 303 collimates an excitation light from the light source 302. The fluorescence cube 304 includes a dichroic mirror, an excitation filter, and an absorption filter (none of which are shown). The fluorescence cube 304 is a light separator that separates an excitation light and a detected light (fluorescence) from the sample S, and separates an excitation light and fluorescence on the basis of a wavelength.

The zoom lens 305 is configured such that a distance between lenses that constitute the zoom lens 305 is changed. The zoom controller 12 changes the distance between the lenses using, for example, a motor (not shown) so that a zoom magnification is changed. In other words, the zoom lens 305 is controlled by the zoom controller 12.

The microscope 300 further includes a tube lens 306 and an imaging device 307 in a detection light path (a transmission light path of the fluorescence cube 304). The tube lens 306 collects, on the imaging device 307, fluorescence that is incident through the objective 110 and the zoom lens 305, and forms an optical image of the sample S. The imaging device 307 is, for example, a CCD camera, which captures an optical image of the sample S and generates image data of the sample S. The imaging device 307 outputs the generated image data to the arithmetic device 20. In the microscopy system according to the present embodiment, a microscope apparatus, that is, the microscope 300, obtains image data of the sample S.

The microscopy system according to the present embodiment permits performing of processing that is similar to that of the microscopy system 1 according to the first embodiment. This permits a calculation of a refractive index of an arbitrary portion in a sample.

The embodiments described above are just examples to facilitate understanding of the present invention, and the invention is not limited to these embodiments. Various modifications and alterations may be made to a microscopy system, a refractive-index calculating method, and a program without departing from the invention specified in the claims. A combination of some of the features in the embodiments described herein may be provided as a single embodiment.

As an example, the configuration in which the Z controller 13 controls the Z driving unit 109 so as to change the position of an observation target plane has been described, but the Z controller 13 may move the stage of the microscope in the optical-axis direction so as to change the position of an observation target plane.

Further, the correction collar 111 has been described as an example of a correction device that corrects for a spherical aberration that varies according to the depth of an observation target plane, but it is sufficient if the correction device can change the amount of spherical aberration that occurs in a light path. The correction device may be, for example, a device that uses an LCOS (Liquid Crystal on Silicon™), a DFM (deformable mirror), or a liquid lens. Further, when an amount of spherical aberration that occurs is large and the spherical aberration is not sufficiently corrected by a single correction device, the amount of spherical aberration to be corrected may be shared by a plurality of correction devices so as to correct for the spherical aberration that occurs in an observation target plane.

Furthermore, when the pixel resolution has a value greater than that of the optical resolution, that is, when a pixel size calculated from the pixel resolution is greater than a distance between two pixels that can be optically detected, a spherical aberration that has occurred is possibly not sufficiently reflected in image data. In this case, in order to correctly reflect, not only in image data but also in an evaluation value, a spherical aberration that has occurred, target-value calculating processing may be performed in a state in which a zoom magnification is increased, such that the pixel resolution has a value smaller than that of the optical resolution. This permits a calculation of a set value that makes it possible to correct, with a higher degree of accuracy, for a spherical aberration that occurs in an observation target plane.

Moreover, as a method for calculating an evaluation value, an example in which one piece of image data is obtained for each set value so as to obtain an evaluation value for each piece of image data obtained has been described, but a plurality of pieces of image data may be obtained for each set value so as to calculate an evaluation value from the plurality of pieces of image data using, for example, a Kalman filter. In this method, it is possible to cancel out noise components included in pieces of image data using the plurality of pieces of image data for each set value, which permits a calculation of a more accurate evaluation value.

**Claims**

1. A microscopy system comprising:

   a microscope apparatus (100,20;200,20:300,20) that has an objective (110) and a correction device (111) correcting for a spherical aberration; and
   a refractive index calculator (20d) that is configured to calculate a refractive index of a sample (S) at a target position in the sample (S) on the basis of a plurality of target set values each of which is a set value of the correction device (111) and each of which corresponds to an amount of spherical aberration that occurs in the microscope apparatus (100,20;200,20:300,20) when an observation target plane is situated at a different position in the sample (S) in an optical-axis direction of the objective (110).

2. The microscopy system according to claim 1, wherein the refractive index calculator (20d) is configured to calculate, on the basis of the plurality of target set values, a relationship, at the target position, between an amount of movement of the observation target plane in the optical-axis direction and an amount of change in target set value, and is configured to calculate the refractive index of the sample (S) at the target position on the basis of the calculated relationship.

3. The microscopy system according to claim 1 or 2, further comprising a target value calculator (20b) that is configured to calculate a target set value on the basis of a plurality of pieces of image data obtained by the microscope apparatus (100,20;200,20:300,20) in a plurality of states in which different set values are respectively set in the correction collar (111).

4. The microscopy system according to any one of claims 1 to 3, further comprising:

   a graph generator (20c) that generates, on the basis of the plurality of target set values, a graph indicating a relationship between a position of the observation target plane in the optical-axis direction and a target set value; and
   a display controller (20e) that associates, with the graph generated by the graph generator (20c), information on the refractive index of the sample (S) at the target position and displays the information and the graph on a display device (30), the refractive index being calculated by the refractive index calculator (20d).

5. The microscopy system according to any one of claims 1 to 3, further comprising
   a display controller (20e) that associates, with a three-dimensional image of the sample (S), information on the refractive index of the sample (S) at the target position and displays the information and the image on a display device (30), the refractive index being calculated by the refractive index calculator (20d).

6. The microscopy system according to any one of claims 1 to 5, wherein
   the correction device (111) includes a correction collar that moves a lens in the objective (110).

7. A refractive-index calculating method comprising:

   obtaining a plurality of target set values each of which is a set value of a correction device (111) correcting for a spherical aberration and each of which corresponds to an amount of spherical aberration that occurs in a microscope apparatus (100,20;200,20:300,20) having an objective (110) and the correction device (111) when an observation target plane is situated at a different position in a sample (S) in an optical-axis direction of the objective (110); and
calculating a refractive index of the sample (S) at a target position in the sample (S) on the basis of the obtained plurality of target set values.

8. The refractive-index calculating method according to claim 7, wherein
the calculating the refractive index

calculates, on the basis of the plurality of target set values, a relationship, at the target position, between an amount of movement of the observation target plane in the optical-axis direction and an amount of change in target set value, and
calculates the refractive index of the sample (S) at the target position on the basis of the relationship.

9. The refractive-index calculating method according to claim 7 or 8, wherein
the obtaining the plurality of target set values
calculates a target set value of each of the plurality of target set values on the basis of a plurality of pieces of image data obtained by the microscope apparatus (100,20;200,20:300,20) in a plurality of states in which different set values are respectively set in the correction collar (111).

10. The refractive-index calculating method according to any one of claims 7 to 9, further comprising:

generating, on the basis of the plurality of target set values, a graph indicating a relationship between a position of the observation target plane in the optical-axis direction and a target set value; and
associating, with the graph, information on the refractive index of the sample (S) at the target position and displaying the information and the graph on a display device (30).

11. The refractive-index calculating method according to any one of claims 7 to 9, further comprising
associating, with a three-dimensional image of the sample (S), information on the refractive index of the sample (S) at the target position and displaying the information and the image on a display device (30).

12. The refractive-index calculating method according to any one of claims 7 to 11, wherein
the correction device (111) includes a correction collar that moves a lens in the objective (110).

13. A program that causes a computer (20) to execute a process comprising:

obtaining a plurality of target set values each of which is a set value of a correction device (111) correcting for a spherical aberration and each of which corresponds to an amount of spherical aberration that occurs in a microscope apparatus (100,20;200,20:300,20) having an objective (110) and the correction device (111) when an observation target plane is situated at a different position in a sample (S) in an optical-axis direction of the objective (110); and
calculating a refractive index of the sample (S) at a target position in the sample (S) on the basis of the obtained plurality of target set values.

**Patentansprüche**

1. Mikroskopiesystem, umfassend:

eine Mikroskopvorrichtung (100, 20 ; 200, 20 : 300, 20), die ein Objektiv (110) und eine Korrektureinrichtung (111) aufweist, die eine sphärische Aberration korrigiert; und
eine Brechungsindexberechnungseinheit (20d), die konfiguriert ist, einen Brechungsindex einer Probe (S) an einer Zielposition in der Probe (S) auf Basis einer Vielzahl von Zielsollwerten zu berechnen, von denen jeder ein Sollwert der Korrektureinrichtung (111) ist und einem Ausmaß sphärischer Aberration entspricht, die in der Mikroskopvorrichtung (100, 20 ; 200, 20 : 300, 20) auftritt, wenn sich eine Beobachtungszielebene an einer unterschiedlichen Position in der Probe (S) in einer Richtung einer optischen Achse des Objektivs (110) befindet.

2. Mikroskopiesystem nach Anspruch 1, wobei
die Brechungsindexberechnungseinheit (20d) konfiguriert ist, auf Basis der Vielzahl der Zielsollwerte eine Beziehung an der Zielposition zwischen einem Bewegungsbetrag der Beobachtungszielebene in der Richtung der optischen Achse und einem Änderungsbetrag im Zielsollwert an der Zielposition zu berechnen, und konfiguriert ist, den Brechungsindex der Probe (S) auf Basis der berechneten Beziehung zu berechnen.

3. Mikroskopiesystem nach Anspruch 1 oder 2, ferner umfassend
eine Zielwertberechnungseinheit (20b), die konfiguriert ist, einen Zielsollwert auf Basis einer Vielzahl von Teilen von Bilddaten zu berechnen, die von der Mikroskopvorrichtung (100, 20 ; 200, 20 : 300, 20) in einer Vielzahl von Zuständen erhalten wurden, in denen jeweils unterschiedliche Sollwerte im Korrekturkragen (111) festgelegt sind.

4. Mikroskopiesystem nach einem der Ansprüche 1 bis 3, ferner umfassend:

   eine Diagrammerstellungseinheit (20c), die auf Basis der Vielzahl der Zielsollwerte ein Diagramm erstellt, das eine Beziehung zwischen einer Position der Beobachtungszielebene in der Richtung der optischen Achse und einem Zielsollwert anzeigt; und
   eine Anzeigesteuerung (20e), die Information über den Brechungsindex der Probe (S) an der Zielposition mit dem von der Diagrammerstellungseinheit (20c) erstellten Diagramm assoziiert und die Information und das Diagramm auf einer Anzeigeeinrichtung (30) anzeigt, wobei der Brechungsindex von der Brechungsindexberechnungseinheit (20d) berechnet wird.

5. Mikroskopiesystem nach einem der Ansprüche 1 bis 3, ferner umfassend eine Anzeigesteuerung (20e), die Information über den Brechungsindex der Probe (S) an der Zielposition mit einem dreidimensionalen Bild der Probe (S) assoziiert und die Information und das Bild auf einer Anzeigeeinrichtung (30) anzeigt, wobei der Brechungsindex von der Brechungsindexberechnungseinheit (20d) berechnet wird.

6. Mikroskopiesystem nach einem der Ansprüche 1 bis 5, wobei die Korrektureinrichtung (111) einen Korrekturkragen enthält, der eine Linse im Objektiv (110) bewegt.

7. Verfahren zum Berechnen eines Brechungsindex, umfassend:

   Erhalten einer Vielzahl von Zielsollwerten, von denen jeder ein Sollwert einer Korrektureinrichtung (111) ist, die eine sphärische Aberration korrigiert, und von denen jeder einem Ausmaß einer sphärischen Aberration entspricht, die in einer Mikroskopvorrichtung (100, 20 ; 200, 20 : 300, 20) mit einem Objektiv (110) und der Korrektureinrichtung (111) auftritt, wenn sich eine Beobachtungszielebene an einer unterschiedlichen Position in einer Probe (S) in einer Richtung einer optischen Achse des Objektivs (110) befindet; und
   Berechnen eines Brechungsindex der Probe (S) an einer Zielposition in der Probe (S) auf Basis der erhaltenen Vielzahl von Zielsollwerten.

8. Verfahren zum Berechnen eines Brechungsindex nach Anspruch 7, wobei das Berechnen des Brechungsindex auf Basis der Vielzahl der Zielsollwerte eine Beziehung an der Zielposition zwischen einem Bewegungsbetrag der Beobachtungszielebene in der Richtung der optischen Achse und einem Änderungsbetrag im Zielsollwert berechnet und
den Brechungsindex der Probe (S) an der Zielposition auf Basis der Beziehung berechnet.

9. Verfahren zum Berechnen eines Brechungsindex nach Anspruch 7 oder 8, wobei
das Erhalten der Vielzahl der Zielsollwerte
einen Zielsollwert jedes der Vielzahl der Zielsollwerte auf Basis einer Vielzahl von Teilen von Bilddaten berechnet, die von der Mikroskopvorrichtung (100, 20 ; 200, 20 : 300, 20) in einer Vielzahl von Zuständen erhalten wurden, in denen jeweils unterschiedliche Sollwerte im Korrekturkragen (111) festgelegt sind.

10. Verfahren zum Berechnen eines Brechungsindex nach einem der Ansprüche 7 bis 9, ferner umfassend:

    Erstellen, auf Basis der Vielzahl der Zielsollwerte, eines Diagramms, das eine Beziehung zwischen einer Position der Beobachtungszielebene in der Richtung der optischen Achse und einem Zielsollwert anzeigt; und
    Assoziieren von Information über den Brechungsindex der Probe (S) an der Zielposition mit dem Diagramm und Anzeigen der Information und des Diagramms auf einer Anzeigeeinrichtung (30).

11. Verfahren zum Berechnen eines Brechungsindex nach einem der Ansprüche 7 bis 9, ferner umfassend
Assoziieren von Information über den Brechungsindex der Probe (S) an der Zielposition mit einem dreidimensionalen Bild der Probe (S) und Anzeigen der Information und des Bilds auf einer Anzeigeeinrichtung (30).

**12.** Verfahren zum Berechnen eines Brechungsindex nach einem der Ansprüche 7 bis 11, wobei die Korrektureinrichtung (111) einen Korrekturkragen enthält, der eine Linse im Objektiv (110) bewegt.

**13.** Programm, das bewirkt, dass ein Computer (20) einen Prozess ausführt, umfassend:

Erhalten einer Vielzahl von Zielsollwerten, von denen jeder ein Sollwert einer Korrektureinrichtung (111) ist, die eine sphärische Aberration korrigiert, und von denen jeder einem Ausmaß einer sphärischen Aberration entspricht, die in einer Mikroskopvorrichtung (100, 20 ; 200, 20 : 300, 20) mit einem Objektiv (110) und der Korrektureinrichtung (111) auftritt, wenn sich eine Beobachtungszielebene an einer unterschiedlichen Position in einer Probe (S) in einer Richtung einer optischen Achse des Objektivs (110) befindet; und
Berechnen eines Brechungsindex der Probe (S) an einer Zielposition in der Probe (S) auf Basis der erhaltenen Vielzahl von Zielsollwerten.

**Revendications**

**1.** Système de microscopie comprenant :

un appareil de microscope (100, 20 ; 200, 20 : 300, 20) qui présente un objectif (110) et un dispositif de correction (111) corrigeant une aberration sphérique; et
un calculateur d'indice de réfraction (20d) qui est configuré pour calculer un indice de réfraction d'un échantillon (S) au niveau d'un emplacement cible dans l'échantillon (S) sur la base d'une pluralité de valeurs réglées cibles dont chacune est une valeur réglée du dispositif de correction (111) et dont chacune correspond à une quantité d'aberration sphérique qui se produit dans l'appareil de microscope (100, 20 ; 200, 20 : 300, 20) lorsqu'un plan cible d'observation est situé au niveau d'un emplacement différent dans l'échantillon (S) dans une direction d'axe optique de l'objectif (110).

**2.** Système de microscopie selon la revendication 1, dans lequel le calculateur d'indice de réfraction (20d) est configuré pour calculer, sur la base de la pluralité de valeurs réglées cibles, une relation, au niveau de l'emplacement cible, entre une quantité de déplacement du plan cible d'observation dans la direction d'axe optique et une quantité de changement de valeur réglée cible, et est configuré pour calculer l'indice de réfraction de l'échantillon (S) au niveau de l'emplacement cible sur la base de la relation calculée.

**3.** Système de microscopie selon la revendication 1 ou 2, comprenant en outre un calculateur de valeur cible (20b) qui est configuré pour calculer une valeur réglée cible sur la base d'une pluralité de parties de données d'image obtenues par l'appareil de microscope (100, 20 ; 200, 20 : 300, 20) dans une pluralité d'états dans lesquels différentes valeurs réglées sont respectivement réglées dans la bague de correction (111).

**4.** Système de microscopie selon l'une quelconque des revendications 1 à 3, comprenant en outre :

un générateur de graphique (20c) qui génère, sur la base de la pluralité de valeurs réglées cibles, un graphique indiquant une relation entre un emplacement du plan cible d'observation dans la direction d'axe optique et une valeur réglée cible ; et
un dispositif de commande d'affichage (20e) qui associe, au graphique généré par le générateur de graphique (20c), des informations sur l'indice de réfraction de l'échantillon (S) au niveau de l'emplacement cible et affiche les informations et le graphique sur un dispositif d'affichage (30), l'indice de réfraction étant calculé par le calculateur d'indice de réfraction (20d).

**5.** Système de microscopie selon l'une quelconque des revendications 1 à 3, comprenant en outre un dispositif de commande d'affichage (20e) qui associe, à une image tridimensionnelle de l'échantillon (S), des informations sur l'indice de réfraction de l'échantillon (S) au niveau de l'emplacement cible et affiche les informations et l'image sur un dispositif d'affichage (30), l'indice de réfraction étant calculé par le calculateur d'indice de réfraction (20d).

**6.** Système de microscopie selon l'une quelconque des revendications 1 à 5, dans lequel le dispositif de correction (111) comprend une bague de correction qui déplace une lentille dans l'objectif (110).

**7.** Procédé de calcul d'indice de réfraction consistant à :

obtenir une pluralité de valeurs réglées cibles dont chacune est une valeur réglée d'un dispositif de correction (111) corrigeant une aberration sphérique et dont chacune correspond à une quantité d'aberration sphérique qui se produit dans un appareil de microscope (100, 20 ; 200, 20 : 300, 20) ayant un objectif (110) et le dispositif de correction (111) lorsqu'un plan cible d'observation est situé au niveau d'un emplacement différent dans un échantillon (S) dans une direction d'axe optique de l'objectif (110) ; et

calculer un indice de réfraction de l'échantillon (S) au niveau d'un emplacement cible dans l'échantillon (S) sur la base de la pluralité obtenue de valeurs réglées cibles.

8. Procédé de calcul d'indice de réfraction selon la revendication 7, dans lequel le calcul de l'indice de réfraction calcule, sur la base de la pluralité de valeurs réglées cibles, une relation, au niveau de l'emplacement cible, entre une quantité de déplacement du plan cible d'observation dans la direction d'axe optique et une quantité de changement de valeur réglée cible, et

calcule l'indice de réfraction de l'échantillon (S) au niveau de l'emplacement cible sur la base de la relation.

9. Procédé de calcul d'indice de réfraction selon la revendication 7 ou 8, dans lequel
l'obtention de la pluralité de valeurs réglées cibles
calcule une valeur réglée cible de chacune de la pluralité de valeurs réglées cibles sur la base d'une pluralité de parties de données d'image obtenues par l'appareil de microscope (100, 20 ; 200, 20 : 300, 20) dans une pluralité d'états dans lesquels différentes valeurs réglées sont respectivement réglées dans la bague de correction (111).

10. Procédé de calcul d'indice de réfraction selon l'une quelconque des revendications 7 à 9, consistant en outre à :

générer, sur la base de la pluralité de valeurs réglées cibles, un graphique indiquant une relation entre un emplacement du plan cible d'observation dans la direction d'axe optique et une valeur réglée cible; et
associer, au graphique, des informations sur l'indice de réfraction de l'échantillon (S) au niveau de l'emplacement cible et afficher les informations et le graphique sur un dispositif d'affichage (30).

11. Procédé de calcul d'indice de réfraction selon l'une quelconque des revendications 7 à 9, consistant en outre à :

associer, à une image tridimensionnelle de l'échantillon (S), des informations sur l'indice de réfraction de l'échantillon (S) au niveau de l'emplacement cible et afficher les informations et l'image sur un dispositif d'affichage (30).

12. Procédé de calcul d'indice de réfraction selon l'une quelconque des revendications 7 à 11, dans lequel
le dispositif de correction (111) comprend une bague de correction qui déplace une lentille dans l'objectif (110).

13. Programme qui amène un ordinateur (20) à exécuter un processus consistant à :

obtenir une pluralité de valeurs réglées cibles dont chacune est une valeur réglée d'un dispositif de correction (111) corrigeant une aberration sphérique et dont chacune correspond à une quantité d'aberration sphérique qui se produit dans un appareil de microscope (100, 20 ; 200, 20 : 300, 20) ayant un objectif (110) et le dispositif de correction (111) lorsqu'un plan cible d'observation est situé au niveau d'un emplacement différent dans un échantillon (S) dans une direction d'axe optique de l'objectif (110) ; et
calculer un indice de réfraction de l'échantillon (S) au niveau d'un emplacement cible dans l'échantillon (S) sur la base de la pluralité obtenue de valeurs réglées cibles.

F I G. 1

F I G. 2

EP 3 118 665 B1

100

TO ZOOM CONTROLLER

103

104

102 101 TO LIGHT SOURCE
CONTROLLER

LASER

106

107 108 TO ARITHMETIC
DEVICE

105

A/D

109 TO Z CONTROLLER

110

111 TO CORRECTION
COLLAR CONTROLLER

F I G. 3

REFRACTIVE-INDEX
DISPLAYING PROCESSING
START

DETERMINE PLURALITY OF
CANDIDATE POSITIONS — S1

CHANGE POSITION OF OBSERVATION
TARGET PLANE TO INITIAL POSITION — S2

S5

CHANGE POSITION
OF OBSERVATION
TARGET PLANE

CALCULATE TARGET VALUE — S3

NO — HAVE TARGET VALUES BEEN
CALCULATED AT ALL CANDIDATE
POSITIONS? — S4

YES

DISPLAY GRAPH — S6

CALCULATE REFRACTIVE INDEX — S7

DISPLAY REFRACTIVE INDEX
INFORMATION ON GRAPH — S8

END

F I G. 4

23

F I G. 5

F I G. 6

```
        ┌─────────────────────┐
        │   REFRACTIVE-INDEX    │
        │ CALCULATING PROCESSING│
        │        START          │
        └──────────┬──────────┘
                   │
                   ▼
     ┌──────────────────────────────┐
     │ OBTAIN INFORMATION ON SPECIFIED│    S11
     │       TARGET POSITION          │
     └──────────────┬───────────────┘
                    │
                    ▼
     ┌──────────────────────────────┐
     │  OBTAIN PLURALITY OF TARGET    │    S12
     │           VALUES               │
     └──────────────┬───────────────┘
                    │
                    ▼
     ┌──────────────────────────────┐
     │ CALCULATE RELATIONSHIP BETWEEN │
     │      AMOUNT OF MOVEMENT OF      │    S13
     │  OBSERVATION TARGET PLANE AND   │
     │  AMOUNT OF CHANGE IN TARGET     │
     └──────────────┬───────────────┘
                    │
                    ▼
     ┌──────────────────────────────┐    S14
     │  CALCULATE REFRACTIVE INDEX OF │
     │    SAMPLE AT TARGET POSITION    │
     └──────────────┬───────────────┘
                    │
                    ▼
             ┌────────────┐
             │    END     │
             └────────────┘
```

F I G. 7

F I G. 8

EP 3 118 665 B1

FIG. 9A

ROTATION ANGLE OF
CORRECTION COLLAR θ[deg]

FIG. 9B

ROTATION ANGLE OF
CORRECTION COLLAR θ[deg]

28

F I G. 1 0

F I G. 1 1

REFRACTIVE-INDEX
DISPLAYING PROCESSING
START

GENERATE 3D IMAGE DATA — S21

DISPLAY 3D IMAGE — S22

CALCULATE REFRACTIVE INDEX — S23

DISPLAY REFRACTIVE INDEX
INFORMATION ON 3D IMAGE — S24

END

F I G. 1 2

FIG. 13

F I G. 1 4

F I G . 1 5

REFRACTIVE-INDEX
DISPLAYING PROCESSING
START

CORRECT FOR SPHERICAL
ABERRATION — S31

OBTAIN 2D IMAGE DATA — S32

CALCULATE REFRACTIVE INDEX — S33

DISPLAY REFRACTIVE INDEX
INFORMATION ON 2D IMAGE — S34

END

F I G. 1 6

```
      ┌─────────────────────────┐
      │  SPHERICAL-ABERRATION    │
      │  CORRECTING PROCESSING   │
      │        START             │
      └─────────────────────────┘
                  │
                  ▼
      ┌─────────────────────────┐   S41
      │  DETERMINE POSITION OF   │
      │ OBSERVATION TARGET PLANE │
      └─────────────────────────┘
                  │
                  ▼
      ┌─────────────────────────┐   S42
      │  CALCULATE TARGET VALUE ON │
      │    BASIS OF POSITION OF    │
      │  OBSERVATION TARGET PLANE  │
      │      AND FUNCTION          │
      └─────────────────────────┘
                  │
                  ▼
      ┌─────────────────────────┐   S43
      │   SET CALCULATED TARGET  │
      │  VALUE TO BE SET VALUE OF │
      │    CORRECTION COLLAR      │
      └─────────────────────────┘
                  │
                  ▼
      ┌─────────────────────────┐   S44
      │   SET OUTPUT OF LASER    │
      └─────────────────────────┘
                  │
                  ▼
           ┌───────────┐
           │    END    │
           └───────────┘
```

F I G. 1 7

```
                    ┌─────────────────────┐
                    │  TARGET-VALUE       │
                    │ CALCULATING PROCESSING │
                    │      START          │
                    └─────────────────────┘
                              │
                              ▼
          ┌──────────────────────────────────┐  S51
          │ DETERMINE PLURALITY OF SET        │
          │ VALUES OF CORRECTION COLLAR       │
          └──────────────────────────────────┘
                              │
                              ▼
          ┌──────────────────────────────────┐  S52
          │ CHANGE SET VALUE OF CORRECTION    │
          │            COLLAR                 │
          └──────────────────────────────────┘
                              │
                              ▼
          ┌──────────────────────────────────┐  S53
          │        OBTAIN IMAGE DATA          │
          └──────────────────────────────────┘
                              │
                              ▼
      NO  ╱─────────────────────────────────╲  S54
     ◄────┤   HAVE PIECES OF IMAGE DATA       │
          │  BEEN OBTAINED FOR ALL OF THE     │
          ╲          SET VALUES?             ╱
                              │ YES
                              ▼
          ┌──────────────────────────────────┐  S55
          │  CALCULATE EVALUATION VALUES      │
          │  FOR PLURALITY OF PIECES OF       │
          │           IMAGE DATA             │
          └──────────────────────────────────┘
                              │
                              ▼
      NO  ╱─────────────────────────────────╲  S56
     ◄────┤    IS PRESCRIBED CONDITION        │
          ╲          SATISFIED?              ╱
                              │ YES
                              ▼
          ┌──────────────────────────────────┐  S58
          │ CALCULATE TARGET VALUE ON BASIS   │
          │  OF PLURALITY OF EVALUATION       │
          │  VALUES AND PLURALITY OF SET      │
          │           VALUES                 │
          └──────────────────────────────────┘
                              │
                              ▼
                    ┌─────────────────┐
                    │       END       │
                    └─────────────────┘


    S57
  ┌──────────────┐
  │  DETERMINE   │
  │ PLURALITY OF SET │
  │   VALUES     │
  └──────────────┘
```

F I G.   1 8

37

EP 3 118 665 B1

FIG. 19A

CONTRAST

θ1 θ2 θ3 θ4 θ5 θ6 θ7 θ8 θ9 θ10  CORRECTION COLLAR
                                            POSITION

SEARCH RANGE

OPERABLE RANGE

FIG. 19B

CONTRAST

θ1 θ2 θ3θ4 θ5 θ6θ7 θ8 θ9 θ10  CORRECTION COLLAR
                                          POSITION

SEARCH RANGE

OPERABLE RANGE

38

F I G. 2 0

```
          ┌──────────────────────────┐
          │      TARGET-VALUE        │
          │  CALCULATING PROCESSING  │
          │         START            │
          └──────────────────────────┘
                       │
                       ▼
   ┌─────────────────────────────────────┐   S61
   │  DETERMINE PLURALITY OF SET VALUES  │
   │       OF CORRECTION COLLAR          │
   └─────────────────────────────────────┘
                       │
                       ▼
   ┌─────────────────────────────────────┐   S62
   │   CHANGE SET VALUE OF CORRECTION    │
   │             COLLAR                  │
   └─────────────────────────────────────┘
                       │
                       ▼
   ┌─────────────────────────────────────┐   S63
   │         OBTAIN IMAGE DATA           │
   └─────────────────────────────────────┘
                       │
                       ▼
       ┌─────────────────────────────────┐   S64
  NO   │  HAVE PIECES OF IMAGE DATA BEEN  │
◄──────│    OBTAINED FOR ALL OF THE SET   │
       │            VALUES?              │
       └─────────────────────────────────┘
                       │ YES
                       ▼
   ┌─────────────────────────────────────┐   S65
   │  CALCULATE EVALUATION VALUES FOR    │
   │  PLURALITY OF PIECES OF IMAGE DATA  │
   └─────────────────────────────────────┘
                       │
                       ▼
   ┌─────────────────────────────────────┐   S66
   │  CALCULATE TARGET VALUE ON BASIS OF │
   │  PIECES OF COORDINATE INFORMATION ON│
   │  PLURALITY OF PIECES OF IMAGE DATA  │
   └─────────────────────────────────────┘
                       │
                       ▼
          ┌──────────────────────────┐
          │           END            │
          └──────────────────────────┘
```

F I G. 2 1

F I G. 2 2

FIG. 23

EP 3 118 665 B1

307

IMAGING
DEVICE

TO ARITHMETIC DEVICE

300

306

304

303  302  301

TO LIGHT SOURCE
CONTROLLER

305

TO ZOOM CONTROLLER

109

110

TO Z CONTROLLER

111

TO CORRECTION
COLLAR CONTROLLER

F I G. 2 4

43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013088138 A

- US 20150015871 A